# EUROPÄISCHE PATENTSCHRIFT

(11) **EP 3 678 865 B1**
(45) Veröffentlichungstag und Bekanntmachung des Hinweises auf die Patenterteilung: **30.10.2024**
(21) Anmeldenummer: 18768816.3
(22) Anmeldetag: 04.09.2018
(51) Int. Cl.: B41F 33/00, B41J 3/407

(54) **VORRICHTUNG UND VERFAHREN ZUM KONTROLLIEREN VON BEDRUCKTEN BEHÄLTNISSEN**
DEVICE AND METHOD FOR MONITORING PRINTED CONTAINERS
SYSTÈME ET PROCÉDÉ DE CONTRÔLE DE RÉCIPIENTS MUNIS D'UNE IMPRESSION

(30) Priorität: 04.09.2017 DE 102017120281
(43) Veröffentlichungstag der Anmeldung: 15.07.2020
(73) Patentinhaber: Krones AG, 93073 Neutraubling (DE)
(72) Erfinder: NIEDERMEIER, Anton, 93073 Neutraubling (DE)
(74) Vertreter: Hannke Bittner & Partner mbB Regensburg
(86) Internationale Anmeldenummer: PCT/EP2018/073752
(87) Internationale Veröffentlichungsnummer: WO 2019/043257

(56) Entgegenhaltungen:
- EP-A2- 3 196 022
- DE-A1- 102014 116 201
- DE-A1- 102015 219 975

## Beschreibung

Die vorliegende Erfindung bezieht sich auf eine Vorrichtung und ein Verfahren zum Kontrollieren von bedruckten Behältnissen, insbesondere zum sequentiellen Kontrollieren von bevorzugt mehrfarbig bedruckten Behältnissen bzw. zum Behandeln von Behältnissen. Aus dem Stand der Technik sind Vorrichtungen und Verfahren, die einen Direktdruck auf Behältnissen betreffen, bekannt. Die Vorteile des Direktdrucks sind in der freien Gestaltung der Etiketten zu sehen. Zum einen werden damit sogenannte NO-Label-Look-Etiketten unnötig, zum anderen unterliegen die heutigen Etiketten der Einschränkung, dass sie nur auf eine Oberfläche aufgebracht werden können, die in der Abwicklung ein ebenes und vorteilhaft zusammenhängendes Blatt ergeben. Im Gegensatz dazu kann mit dem Direktdruck, beispielsweise ein am Behälter erhabener oder tiefgezogener Schriftzug oder eine Kugelfläche bedruckt werden. Weitere Ausführungen sind machbar. So können heute die bekannten, schraubenförmig gedrehten Behälter nur mit Sleeve etikettiert werden, ein Kunststoffschlauch, der auf den Behälter thermisch aufgeschrumpft wird, mit dem Nachteil, dass tiefgezogene Bereiche "überspannt" werden und damit die Ausdruckskraft der Behälterform abschwächt. Hier könnte der Direktdruck seine Vorteile voll zur Geltung bringen.

Wird der Behälter beispielsweise mittels Inkjet-Druckverfahren bedruckt, ist leicht vorstellbar, dass dem Druckkopf, ähnlich einem Office-Drucker, ein neues Artwork bzw. Bildelement bzw. Druckbild eingespielt wird. Der Druckkopf benötigt dazu sogenannte RIP-Dateien, die im Wesentlichen bestimmen, in welcher Sequenz und mit welcher Tropfengröße jede einzelne Druckdüse in jeder der möglichen Druckfarben angesteuert wird. Aufgrund der Druckauflösung, der Farbenzahl und der variablen Tröpfchengröße ist die Datenmenge erheblich. Eine, mit der Produktionsleistung schritthaltende, so zu sagen "just in time", Versorgung, mit neuen Druckdaten würde die Bandbreite der Kommunikationsschnittstellen zu den Druckköpfen ansteigen lassen. Beispielsweise soll eine Druckmaschine mit 720 dpi, einer Maschinenleistung von 48.000 Behältnisse pro Stunde und üblich mit fünf Farben (CMYK und weiß) auf einer Fläche von 70 x 140 mm² bedrucken. Dazu werden üblicherweise noch vier Tropfengrößen benutzt. Die Fläche entspricht ca. 2000 x 4000 Dots. Jeder Dot muss in jedem Farbkanal abgebildet werden, d.h. es sind in Summe fünf Farben x 8 Mio Dots je Farbe = 40 Mio Dots. Wird im Speicher ein Dot mit einem Byte repräsentiert, werden für die Beschreibung einer Druckfläche von 70 x 140 mm² bereits 40 MB Speicher mit Informationen belegt. Druckt die Druckmaschine mit 48.000 Behältnissen pro Stunde (= 15 Hz) und sollte jedes Artwork individuell gestaltet sein, müssten für die genannte Druckfläche permanent Druckdaten mit 600 MB/s erzeugt und in die Druckköpfe transferiert werden. Eine Druckmaschine, die am Markt bestehen soll, wird eine achtstündige, permanente Maschinenleistung erwartet, besser ist ein 24/7-Betrieb. Sollten zwei Flächen je Behältnis mit einer Breite von 70 mm und einer Höhe von 140 mm bedruckt werden, so müssten mit einer Produktionsleistung von 48.000 Behältnissen pro Stunde permanent (im Mittel) 1,2 GB/s errechnet und transferiert werden. Die Druckfläche ist typisch bei Home oder Health-Care-Produkten und nur als Beispiel aufgeführt. Jedoch zeigt das Rechenbeispiel, welche Datenmenge pro Sekunde in der Druckmaschine rechtzeitig bereitgestellt und an den einzelnen Druckkopf bereitgestellt werden müsste.

Bisher geht man im Stand der Technik einen anderen Weg: Es ist einfacher, in jeder einzelnen Druckeinheit einen Satz an Rip-Dateien/Informationen bereitzuhalten und diesen in eine feste Abfolge oder auch beliebig von Behältnis zu Behältnis weiterzuschalten. Damit entledigt man sich von der Notwendigkeit, einen permanenten Datenstrom bereitzuhalten und gewinnt eine hohe Flexibilität. Es muss dabei nicht immer das ganze Artwork/Label hinterlegt sein, sondern es können auch nur (Flächen-) Teile ersetzt werden. Beispielsweise kann die Produktvorderseite immer gleich und die Produktrückseite mit den Legal-Texten landesspezifisch ausgestaltet sein. Es kann ein "Vier-Farben-Füller" nachgeschaltet sein und es können vier unterschiedliche "Labels" je nach Geschmacksrichtung (Banane, Vanille, Erdbeere, Schokolode) gedruckt werden. In etwa können bei einer Champions-League-Edition immer dieselben Label gedruckt werden und lediglich die Spielerabbildungen gewechselt werden. Ähnlich einer "Buchstaben-Suppe" können auch über mehrere Behälter hinweg "Botschaften" oder zusammenhängende Bilder erstellt werden, Schachfiguren, Dominosteine (Punkte, Bilder). Alle genannten Beispiele haben gemeinsam, dass sie einen bestimmten Umfang an unterschiedlichen Artworks bzw. Bildelementen bzw. Druckbildern oder Teilen davon vorhalten und damit eine Abwechslung generiert wird.

Dabei ist im Stand der Technik vorteilhaft, dass die Abfolge zentral gesteuert werden kann. Es kann sein, dass in weiteren Prozessschritten bis zur Auslieferung des Produkts Fehler auftreten und ein oder mehrere Artikel erneut (nach-)produziert werden müssen. Als wichtigste nachfolgende Prozessschritte können genannt werden, das Aushärten der Farbe, Kontrolle des Aufdrucks (ein tatsächlicher fehlerhafter Druck wurde produziert) oder das Füllen (ein Füllfehler, Verschließfehler), Verpacken (Fehler beim Verpacken). In jedem Prozessschritt können bestimmte Varianten "verloren" gehen und ein gezieltes Nachproduzieren derjenigen im Batch erfordern.

Im Stand der Technik ist es heute üblich, dass bei der Kontrolle des gedruckten Behältnisses ein Prüfling, ein Artwork bzw. Bildelement bzw. Druckbild, der sogenannte Master-Print als Vergleichsvorlage in der Kontrolleinheit erstellt wird. Dabei wird beim ersten Andruck ein für vorbildlich gehaltenes Bildelement bzw. Druckbild, durch das Ablichten im Kontrollsystem zum Referenzbild erkoren. Wird dieser Master-Print für einen späteren Batch wieder verwendet, und zu diesem Zweck abgespeichert, spricht man von einem Golden Master-Print, der im Kontrollsystem im nicht flüchtigen Datenspeicher (HD, Cloud, ...) wieder abrufbar abgelegt wird. Heute ist üblich, dass bei Kontrollsystemen in der Druckindustrie gegen den einen (Golden) Master-Print geprüft wird. Natürlich können auf dem Master-Print unterschiedliche Inhalte (Banane, Vanille,...) enthalten sein, aber eben nicht variabel. Der Druckbogen als Ganzes ist konstant. Ein weiterer bekannter Weg ist, und dieser findet Anwendung z.B. beim Druck von Beipackzetteln in schwarz auf weißem Papier, gegen eine PDF-Datei als Vorlage zu prüfen. Hier wird der von Menschenhand ausgeführte und möglicherweise fehlerbehaftete Schritt, einen inhaltlich falschen Master-Print zu erstellen und diesen für den Druck zu verwenden, ausgeschaltet. Das heißt, es wird darauf abgezielt, die (Golden) Master-Print-Vorlage gegen eine PDF-Vorlage auszutauschen. Die PDF-Vorlage gilt als Synonym für sämtliche Vorlagen, die maschinell errechnet, erstellt wurden, anstatt sie durch das Kontrollsystem zurück zu lesen, etwa durch eine Kamerabildaufnahme. Im Stand der Technik werden sogenannte PDF-Dateien zwischen zwei Druck-Batches ausgetauscht. Im Weiteren wird unter dem Begriff Master-Print sowohl die Vorlage, generiert durch das Ablichten des Referenz-Druckbildes bzw. Referenz-Bildelement als auch die PDF-Datei oder andere Dateivorlagen zusammengefasst.

Im Stand der Technik kann der Master-Print aufgrund des Nyquist-Abtast-Theorems eine doppelt so hohe Auflösung in beide Richtungen benötigen im Vergleich zu den Druckdaten. Das heißt anstelle von 600 MB/s oder 1,2 GB/s würde hier ein Kommunikationstraffic von 2,4 GB/s oder 4,8 GB/s anfallen.

Im Stand der Technik üblich sind verschiedene engmaschige Kontrollen, wie die punktuelle Überprüfung von Farbabweichungen, beispielsweise mittels kalibrierter (Delta E) oder nicht kalibrierter Messung.

Im Stand der Technik ist üblich die Überprüfung von Text oder Textbausteinen, die in einem bestimmten Font gedruckt werden. Dieser Text wird üblicherweise in einem ersten Schritt in einzelne Buchstaben/Ziffern "zerlegt"/ segmentiert, anschließend über einen OCR- oder OCV-Algorithmus identifiziert und gegen einen definierten Inhalt geprüft.

Im Stand der Technik üblich ist das Vorhalten von mehreren Produktarten oder Varianten von einem Produkt und das gleichzeitige Prüfen gegen alle Vorlagen oder nach einer bestimmten Vorschrift. Dies ist beispielsweise aus einer im Flaschenkeller üblichen Behältnissortieranlage bekannt. Hier wird der aktuelle Prüfling am Band gegen verschieden Prüflingsvorlagen, wie Bierflaschenform "Euro" oder "Bügelverschluss" und diese in Braun-, Weiß- oder Grün-Glas. Über den besten Match wird der aktuelle Prüfling klassifiziert und sortiert. Oder es wird Obst z.B. nach Sorte, Größe, Farbe usw. sortiert, indem mit mehreren oder allen Vorlagen verglichen und der beste Match herangezogen wird. Mit diesem Vorgehen können "unbekannte" Prüflinge mittels Vergleich von mehreren "Vorlagen" identifiziert und klassifiziert werden.

Im Stand der Technik kann die Anzahl der Abfolgen zentral gesteuert werden. Dies wird benötigt, um eine beauftragte Menge von Abfolgen produzieren zu könne. Beispielsweise wird als Auftrag eingestellt, 2000-mal einen Weihnachtskalender, bestehend aus 24 Behältnissen, mit 24 unterschiedlichen Motiven zu produzieren. Die 24 Motive stehen in einem Zusammenhang. Im einfachsten Fall sind die Zahlen 1 bis 24 aufgetragen. Im Stand der Technik ist es üblich, die Abfolge der 24 Motive so lange zu drucken, bis am letzten Prozessschritt, dem Verpacken des Weihnachtskalenders 2000 Sets bereitstehen oder es sicher erreicht werden kann.

Die Anzahl der Abfolgen ist in diesem Beispiel 2000. In der Praxis werden ca. 5 % mehr produziert, wenn man mit ca. 5 % Produktionsfehlern rechnet. Die beispielhaft genannten 5 % sind die Summe aller möglichen Fehler in allen Prozessschritten der Herstellung. D.h. anstelle der beauftragten 2000 Abfolgen wird von vornherein eine Überproduktion von 2100 Abfolgen im Werk produziert, um am Ende 2000 Abfolgen zu bekommen. Es können nur komplette Sets an Weihnachtskalender geliefert werden. Tritt an einem Prozessschritt ein Fehler an einem Behältnis auf, so müsste die komplette Abfolge ausgeleitet und später mit der Überproduktion reorganisiert werden.

Als wichtigste Prozessschritte können genannt werden, das Bedrucken selbst, das Aushärten der Farbe, die Kontrolle des Aufdrucks (ein tatsächlich fehlerhafter Druck wurde produziert oder ein anderer Druck wurde erwartet), das Füllen (ein Füllfehler, Verschließfehler), das Verpacken (Fehler beim Verpacken). In jedem Prozessschritt können bestimmte Varianten ausgeschleust bzw. "verloren" gehen und ein gezieltes Nachproduzieren derjenigen im Batch erfordern.

Die Überproduktion von zusätzlichen 100 Abfolgen könnte man noch tolerieren, jedoch wird diese Herangehensweise äußerst ineffektiv, wenn anstelle der 2000 Abfolgen eine wesentlich geringere Abfolge produziert werden soll, etwa 10 Abfolgen. Hier stellt sich die Frage, wieviel Überproduktion hier eingestellt werden soll. Bei 10 Abfolgen werden in obigem Beispiel in Summe 240 Behältnisse produziert, bei einer Ausfallquote von 5 % würde mit 12 Verlust-Behältnissen zu rechnen sein. Im schlimmsten Fall wären also 12 Behältnisse unbrauchbar. Die Wahrscheinlichkeit, dass 12 unterschiedliche Motive betroffen sind, ist sehr gering. Mit dem Stand der Technik müssten höchstwahrscheinlich zwei, bei einem Prozessfehler, der ein Motiv nur betrifft, zehn Abfolgen zusätzlich produziert werden. Im Verhältnis zur bestellten Menge bedeutet dies eine Überproduktion von 20 % - 100 %. Problematisch ist nicht nur der unnötige Material- und Produkteinsatz, auch der Aufwand muss berücksichtigt werden.

Aus den Vorrichtungen und Verfahren, die derzeit aus dem Stand der Technik bekannt sind, ergibt sich der Nachteil, dass gegen einen starren Master-Print geprüft wird, wobei egal ist, ob der Master-Print durch das Zurücklesen eines Drucks erzeugt oder aus einer Datei synthetisch generiert wurde. Hier fehlt die Flexibilität des Kontrollsystems, um mit der Flexibilität der Behältnis-Bedruckungsmaschine Schritt zu halten.

Nachteilig ist, dass der Master-Print zwischen zwei Druck-Batches ausgetauscht wird. Wird der Master-Print in-Time ausgetauscht, ist ein permanenter, kostspieliger Datenstrom notwendig. Kostspielig, da eine sehr hohe Datenmenge pro Sekunde anfällt und die Infrastruktur äußerst verfügbar sein muss.

Nachteilig ist, dass gleichzeitig gegen mehr als einen Master-Print geprüft wird. So kann z.B. im folgenden Beispiel nicht unterschieden werden, ob der Druck richtig oder falsch ist: Es soll sowohl ein Behältnis mit Aufdruck "Color" für den amerikanischen Raum produziert werden, als auch für den englischen Raum, hier"colour". Das Kontrollsystem lädt im Stand der Technik beide (Teil-)Artworks bzw. Bildelemente bzw. Druckbilder. Es wird immer in der einen Vorlage ein "in Ordnung" und in der andern Vorlage ein "nicht in Ordnung" generieren. Ungeklärt bleibt dann die Frage, welche Version bei dem kontrollierten Behältnis herzustellen gewesen wäre. Ein weiteres Beispiel ist die Zutatenliste auf der Behältnisrückseite, beispielsweise im "4-Farben-Füller" könnte die Vorderseite mit dem "Vanille"-Artwork/Druckbild/Bildelement, die Rückseite mit der Zutatenliste der Schokolade bedruckt sein. Hiervon ausgehend kann im Stand der Technik nicht gefolgert werden, ob die Vorderseite oder die Rückseite falsch ist oder der Druckprozess einen Erdbeere-Behälter produzieren wollte und die Druckköpfe intern mit einer falschen Schrittweite weiter geschalten wurden.

Der vorliegenden Erfindung liegt die Aufgabe zugrunde, die aus dem Stand der Technik bekannten Nachteile zu überwinden und eine flexible, auf etwaige Störungen hin variabel reagierende Bedruckungsvorrichtung bzw. Kontrollvorrichtung vorzusehen, bei dem bzw. bei der dennoch die während eines Betriebs (etwa eines Druckprozesses) zu übermittelnde Datenmengen in einem akzeptablen Größenbereich bleiben.

Aus der DE 10 2014 116201 A1 sind Druckaggregate bekannt, die an Behältnissen einen Direktdruck anbringen. Die Behältnisse werden dabei auf einem kreisförmigen Transportpfad geführt. Darüber hinaus ist eine Inspektionseinrichtung vorgesehen, die die Behältnisse bzw. deren Testmarkierungen insbesondere in einem Testbetrieb inspiziert. Im Anschluss ist ein Vergleich mit in einer Speichereinrichtung abgelegten Referenzbildern vorgesehen.

Aus der DE 10 2014 116201 A1 ist ein Verfahren zum individuellen Bedrucken von Behältern im Taktbetrieb bekannt. Dabei werden die Behälter in der Druckeinrichtung einzeln bedruckt.

Aus der EP 3 196 022 A2 ist ein Drucksystem bekannt. Darin wird eine Trägeranordnung beschrieben, die dazu eingerichtet ist, wenigstes einen Objektstrom zu tragen und die wenigstes ein Feld von Greifern zum Halten der Objekte aufweist. Weiterhin ist ein Mobilisier-Mechanismus vorgesehen, der dazu eingerichtet ist, die Trägeranordnung an eine Bahn zu koppeln.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Eine erfindungsgemäße Kontrolleinrichtung zum Kontrollieren von einer Vielzahl von Behältnissen, welche von einer Direktdruckmaschine mit wenigstens einem ersten Bildelement bedruckt wurden, weist eine Transporteinrichtung auf, welche die zu kontrollierenden, bedruckten Behältnisse entlang eines vorgegebenen Transportpfads insbesondere vereinzelt und bevorzugt nacheinander der Kontrolleinrichtung zuführt und/oder abführt, wobei die Kontrolleinrichtung die bedruckten Behältnisse wenigstens auf das von der Direktdruckmaschine aufgebrachte erste Bildelement hin kontrolliert und eine Speichereinrichtung aufweist, in der wenigstens ein Satz von zu kontrollierenden ersten Bildelementen abgelegt ist.

Erfindungsgemäß nimmt die Kontrolleinrichtung für jedes zu kontrollierende Behältnis die Kontrolle unter Berücksichtigung wenigstens eines diesem Behältnis eindeutig zugeordneten zu kontrollierenden Bildelement aus dem Satz von zu kontrollierenden ersten Bildelementen vor. Mit anderen Worten wird das auf das zu kontrollierende Behältnis aufgebrachte erste Bildelement nicht mit allen einzelnen ersten Bildelementen aus dem Satz von zu kontrollierenden ersten Bildelementen verglichen, wie es im Stand der Technik üblich war, sondern genau (und ausschließlich) mit demjenigen ersten Bildelement (aus dem Satz von ersten Bildelementen), welches durch die Direktdruckmaschine auf das Behältnis aufzubringen war. Bevorzugt wird daher insbesondere das zu kontrollierende Behältnis von der Kontrolleinrichtung nicht auf wenigstens ein Bildelement aus dem in der Speichereinrichtung abgelegten Satz von zu kontrollierenden ersten Bildelementen kontrolliert.

Bevorzugt wird als Transporteinrichtung ein Transportband verwendet. Die Transporteinrichtung kann Haltemittel zum Halten und/oder Greifen der Behältnisse und/oder zum sequentiellen bzw. vereinzelten Transportieren der Behältnisse und/oder bevorzugt eine Verzögerungseinrichtung, die den Abstand zwischen aufeinanderfolgend transportierten Behältnisse beeinflusst (vergrößert oder verkleinert), aufweisen. Ferner ist die Transporteinrichtung bevorzugt derart geeignet und dazu bestimmt, wenigstens 10.000, bevorzugt wenigstens 20.000 und besonders bevorzugt wenigstens 40.000 Behältnisse pro Stunde bevorzugt nacheinander zu transportieren. Bevorzugt ist die Kontrolleinrichtung dazu geeignet und bestimmt, wenigstens 10.000, bevorzugt wenigstens 20.000 und besonders bevorzugt wenigstens 40.000 Behältnisse pro Stunde zu kontrollieren.

Bevorzugt handelt es sich bei den Behältnissen um (hohle und) ungefüllte Behältnisse. Bevorzugt handelt es sich dabei um Glasbehältnisse und/oder Kunststoffbehältnisse aus PET, PP oder PE. Es können sowohl zylindrische Behälter, als auch Formflaschen bedruckt werden. Ferner handelt es sich bei der Vielzahl von Behältnissen bevorzugt um eine Vielzahl gleichartiger Behältnisse, also Behältnisse gleichen Typs und/oder gleicher Größe. Bevorzugt handelt es sich bei der Vielzahl von Behältnissen um vergleichsweise kleine Chargen.

In einer vorteilhaften Ausführungsform ist die Kontrolleinrichtung dazu geeignet und bestimmt, wenigstens für ein zu kontrollierendes Behältnis eine Änderung der Zuordnung eines diesem Behältnis in der Speichereinrichtung abgelegten Bildelementes vorzunehmen. Dies bietet den Vorteil, dass eine flexible Reaktion auf die Detektion eines fehlerhaft behandelten, etwa fehlerhaft bedruckten, Behältnisses möglich ist. Bevorzugt kann etwa ein Behältnis, welches zunächst mit einem vorgegebenen ersten Bildelement bedruckt werden sollte, durch die Änderung der Zuordnung mit dem, dem fehlerhaften Behältnis entsprechenden, ersten Bildelement bedruckt und dann (durch die Zuordnungsänderung) mittels der Kontrolleinrichtung auch auf dieses erste Bildelement hin kontrolliert werden.

In einer weiteren vorteilhaften Ausführungsform erfolgt die Änderung der Zuordnung ohne Übermittlung bzw. Übertragung eines Bildelementes (an die Speichereinrichtung bevorzugt der Kontrolleinrichtung). Mit anderen Worten wird nicht die Bildinformation des Bildelementes übermittelt, sondern die Bildelemente sind bereits (vollständig) in der Speichereinrichtung (der Kontrolleinrichtung und bevorzugt auch der Direktdruckmaschine) abgelegt und das betreffende Bildelement wird bevorzugt (lediglich) neu in die Sequenz bzw. Abfolge zu kontrollierender (erster) Bildelemente miteingebunden bzw. an einer anderen Stelle der Abfolge zu kontrollierender (erster) Bildelemente miteingebunden. Dies bietet den Vorteil, dass die zu transferierende Datenmenge möglichst klein gehalten werden kann, weil nicht die den Bildinhalt betreffende Datenmenge (an die Speichereinrichtung) transferiert werden muss, sondern lediglich die Information, an welcher Stelle der Abfolge vorgegebener Bildelemente das betreffende Bildelement einzubinden ist.

Bevorzugt weist die Vorrichtung eine Interaktionseinrichtung auf, die dazu geeignet und bestimmt ist, bevorzugt ohne Unterbrechung des Betriebs (insbesondere des Betriebs der Direktdruckmaschine und/oder der Kontrolleinrichtung), die vorgegebene Abfolge von zu druckenden Bildelementen von wenigstens dem ersten Druckaggregat der Druckeinrichtung bzw. der Direktdruckmaschine (und/oder die vorgegebene Abfolge der in der Kontrolleinrichtung abgelegten zu kontrollierenden ersten Bildelemente) zu ändern und/oder den in der Speichereinrichtung des Druckaggregats abgelegten Satz von Bildelementen zu modifizieren, wobei hierzu bevorzugt keine den Bildinhalt betreffende Informationen übermittelt werden, sondern bevorzugt lediglich eine (geänderte oder neue) Anordnung in der (vorgegebenen) Abfolge von zu druckenden ersten Bildelementen und/oder eine Angabe, die für eine Anzahl charakteristisch ist, wie oft ein bestimmtes Behältnis bzw. ein bestimmter Behältnistyp (in Folge) der Druckeinrichtung bzw. der Direktdruckmaschine zugeführt wird und/oder wie oft ein Behältnis mit demselben ersten Bildelement bedruckt werden soll und/oder bevorzugt die Angabe einer absoluten oder relativen Anordnung, an der sich ein bestimmter Behältnistyp in der Zufuhr der Vielzahl von Behältnissen (relativ zu anderen Behältnistypen) befindet, und/oder die Angabe einer absoluten oder relativen Anordnung, an der sich ein vorgegebenes erstes Bildelement relativ zu wenigstens einem weiteren ersten Bildelement befindet.

In einer weiteren vorteilhaften Ausführungsform weist die Interaktionseinrichtung ein Element auf, das ausgewählt ist aus einer Gruppe, die eine Digitalleitung, eine Vielzahl Digitalleitungen, eine oder mehrere höherwertige kabelgebundene Schnittstelle(n) wie beispielsweise ein serieller Bus (z.B. CAN, Profibus, USB, RS323, RS485 etc.), ein Netzwerk-basierter Bus (bevorzugt Ethernet, Ether CAT, ProfNet, PowerLink und/oder DeviceNet etc.), eine oder mehrere kabellose Kommunikationsverbindung(en) (BlueTooth, NFC und/oder WLAN etc..) und Kombinationen hieraus enthält.

In einer weiteren vorteilhaften Ausführungsform weist der Satz von zu kontrollierenden ersten Bildelementen weniger als 200, bevorzugt weniger als 100, bevorzugt weniger als 90 und besonders bevorzugt weniger als 80 Bildelemente auf. Eine mengenmäßige Beschränkung der Anzahl der (zu kontrollierenden ersten) Bildelemente bietet den Vorteil, die erforderliche Speichergröße der Speichereinrichtung, in der diese abgelegt sind, möglichst klein halten zu können. Trotz alledem ist durch die durch die vorgeschlagene Erfindung erzielte Variabilität dieser Bildelemente eine hohe Flexibilität bzw. Anpassungsmöglichkeit geboten.

In einer weiteren vorteilhaften Ausführungsform ist der Satz von zu kontrollierenden ersten Bildelementen in der Speichereinrichtung (der Kontrolleinrichtung) (und/oder der zu druckenden ersten Bildelemente in der Speichereinrichtung der Direktdruckmaschine) in einem Rastergrafikformat bzw. bevorzugt als RIP-Datei abgelegt. Denkbar wäre aber auch, dass die (zu kontrollierenden ersten) Bildelemente (jeweils) in einem Vektorgrafikformat (in der Speichereinrichtung) der Kontrolleinrichtung abgelegt sind und bevorzugt eine Umrechnung in ein Rastergrafikformat in der Kontrolleinrichtung erfolgt. Die Bildelemente können dabei auch als PDF-Dateien und/oder als Rasterdruck-Dateien vorliegen bzw. in der Speichereinrichtung abgelegt sein. Denkbar ist also, dass die Kontrolleinrichtung gegen (wenigstens) eine PDF-Datei als Vorlage kontrolliert.

In einer weiteren vorteilhaften Ausführungsform ist der Kontrolleinrichtung eine Abfolge von in der Speichereinrichtung abgelegten Bildelementen vorgebbar, wobei die Kontrolleinrichtung nachfolgende zu kontrollierende Behältnisse entsprechend dieser vorgegebenen Abfolge auf das jeweilige Bildelement hin kontrolliert, und eine Änderung dieser Abfolge bevorzugt ohne Übermittlung des wenigstens einen geänderten Bildelements erfolgt.

In einer weiteren vorteilhaften Ausführungsform ist über eine Änderung der vorgegebenen Abfolge eine Anzahl der abgelegten Bildelemente, die angibt, wie viele zu kontrollierende Behältnisse, insbesondere unmittelbar aufeinander folgend, auf dieses Bildelement hin kontrolliert werden, änderbar. Dies bietet den Vorteil, dass im Falle eines als fehlerhaft beurteilten Behältnisses mit einem bestimmten Bildelement, dieses Behältnis flexibel durch eine Änderung der Abfolge dieser Anzahl nachproduziert werden kann.

In einer weiteren vorteilhaften Ausführungsform weist die Kontrolleinrichtung eine Inspektionseinrichtung zum wenigstens abschnittsweisen Erfassen wenigstens eines auf einem zu kontrollierenden Behältnis angeordneten Bildelementes auf, wobei die Kontrolleinrichtung die Kontrolle unter Berücksichtigung eines aufgenommenen Bildes wenigstens eines durch sie erfassten Bildelementabschnitts vornimmt.

In einer weiteren vorteilhaften Ausführungsform führt die Kontrollreinrichtung wenigstens einen Kontrollschritt in Abhängigkeit des zu kontrollierenden Behältnisses durch. Dabei kann die Kontrolleinrichtung etwa in Abhängigkeit des zu kontrollierenden Behältnistyps oder aber in Abhängigkeit von einem bestimmten auf dem zu kontrollierenden Behältnis aufgebrachten Bildelement einen Kontrollschritt auswählen.

In einer weiteren vorteilhaften Ausführungsform ist die Kontrolleinrichtung dazu geeignet und bestimmt, in Abhängigkeit des zu kontrollierenden Behältnisses, bevorzugt in Abhängigkeit eines von der Kontrolleinrichtung erfassten Behältnisses, eine von wenigstens zwei Kontrollvorlagen (bzw. Kontrollverfahren), die sich in mindestens einem Verfahrensschritt voneinander unterscheiden, auszuwählen und durchzuführen. Entsprechend des vorliegenden zu kontrollierenden Behältnisses kann somit ein an diesen angepasstes Kontrollverfahren verwendet werden. Dies bietet den Vorteil, dass durch eine Wahl eines an ein individuelles Behältnis angepasstes bzw. ein für dieses optimiertes Kontrollverfahren eine Zeitersparnis bzw. eine Einsparung an Rechen- bzw. Auswerteleistung möglich ist. Bevorzugt führ also das Kontrollsystem bzw. die Kontrolleinrichtung in Abhängigkeit des Prüflings bzw. des zu kontrollierenden Behältnisses bestimmte Kontrollschritte bzw. Kontrollverfahren durch. So ist es denkbar, dass im Programmablauf des Kontrollsystems bzw. der Kontrolleinrichtung insbesondere verschiedene Ablaufwege vorgesehen sind, die bevorzugt in Abhängigkeit des Prüflings bzw. des zu kontrollierenden Behältnisses durchlaufen werden.

In einer weiteren vorteilhaften Ausführungsform ist die Kontrolleinrichtung dazu geeignet und bestimmt, ein spezialisiertes Kontrollverfahren in Abhängigkeit von wenigstens einem vorgegebenen Parameter durchzuführen.

In einer weiteren vorteilhaften Ausführungsform wird aus dem vorgegebenen Parameter abgeleitet, welcher Kontrollschritt bzw. welches Kontrollverfahren durchgeführt wird und/oder welcher Abschnitt des zu kontrollierenden Behältnisses kontrolliert und/oder inspiziert wird und/oder welcher Vergleich durchgeführt wird. Dabei kann beispielsweise lediglich ein (kleinerer) Bereich eines Bildelementes, der jedoch für dieses charakteristisch ist, für die Kontrolle verwendet werden. Beispielsweise kann hierfür ein Bereich bzw. Ausschnitt eines Bildelementes gewählt werden, der besonders kontrastreich ist und/oder in dem alle Druckfarben des Bildelementes verwendet wurden bzw. anhand von dem bereits beurteilt kann, ob ein korrekter Aufdruck (an der korrekten Position und mit dem korrekten Farbauftrag) an dem Behältnis aufgebracht worden ist. Bevorzugt werden zum Masterprint bzw. zu einem Bildelement bzw. zu wenigstens einem Bildelement und bevorzugt zu jedem Bildelement aus dem Satz von zu kontrollierender Bildelemente weitere Informationen mitgegeben bzw. paketiert, die beispielsweise Informationen über spezialisierte Kontrollen bzw. spezialisierte Kontrollverfahren oder Kontrollschritte beinhalten. Im einfachsten Fall können dies Parametersätze, passend zu der spezialisierten Kontrolle sein. Die Parametersätze oder die Ablaufwege bestimmten bevorzugt, ob, wo und was bevorzugt durch die Kontrolleinrichtung geprüft bzw. kontrolliert wird. Spezialisierte Kontrollen bzw. spezialisierte Kontrollverfahren sind bevorzugt ausgewählt aus einer Gruppe von Kontrollverfahren, die eine Farbprüfung, eine Farbabweichungsprüfung, eine OCR/OCV-Prüfung, eine 1 D/2D-Code-Überprüfung auf Inhalt und/oder Qualitätsparameter, eine Überprüfung (wenigstens) eines Versatzes von verschiedenen Layern (wobei typisch die Farblayer CMYK und White sind) bzw. Bildelementen sowie Kombinationen hieraus enthalten.

Vorteilhaft ist nun durch die Zusatzinformationen, ob, wo und welche Farbe mit welchen Grenzen geprüft wird. Oder ob, wo und welcher Text durch eine OCR/OCV klassifiziert wird. So ist nun eindeutig, ob und wo neben dem üblichen Bildelementvergleich bzw. Druckbildvergleich weitere Prüfschritte, wie z.B. Farbpunktbestimmung, 1D oder 2D-Code-Überprüfung auf Inhalt und/oder die Qualität dessen, usw. bestimmt werden. Dies kann im Sinne der Flexibilisierung für jedes Behältnis im Behältnisstrom unterschiedlich gestaltet werden.

In einer weiteren vorteilhaften Ausführungsform übermittelt die Kontrolleinrichtung in Abhängigkeit von dem Ergebnis der von der ihr vorgenommenen Kontrolle eines zu kontrollierenden Behältnisses ein Signal an wenigstens eine, bevorzugt in Transportrichtung der Behältnisse stromaufwärts angeordnete, Behältnisbehandlungseinrichtung, bevorzugt eine Direktdruckmaschine.

Die vorliegende Erfindung ist weiterhin gerichtet auf ein Verfahren zum Kontrollieren von einer Vielzahl von Behältnissen, welche von einer Direktdruckmaschine mit wenigstens einem ersten Bildelement bedruckt wurden, wobei die zu kontrollierenden, bedruckten Behältnisse mittels einer Transporteinrichtung entlang eines vorgegebenen Transportpfads insbesondere vereinzelt und nacheinander wenigstens einer Kontrolleinrichtung zugeführt und/oder abgeführt werden, wobei die Kontrolleinrichtung die bedruckten Behältnisse wenigstens auf das von der Direktdruckmaschine aufgebrachte erste Bildelement hin kontrolliert.

Erfindungsgemäß wird in einer Speichereinrichtung wenigstens ein Satz von zu kontrollierenden ersten Bildelementen abgelegt, wobei die Kontrolleinrichtung für jedes zu kontrollierende Behältnis eine Kontrolle des angeordneten Bildelementes unter Berücksichtigung wenigstens eines diesem Behältnis eindeutig zugeordneten zu kontrollierenden Bildelement aus dem Satz von zu kontrollierenden ersten Bildelementen vornimmt.

Dabei ist die obig beschriebene Vorrichtung insbesondere dazu eingerichtet und dafür vorgesehen, dieses Verfahren durchzuführen, d.h. dass alle für die obig beschriebene Vorrichtung ausgeführten Merkmale ebenso für das hier beschriebene Verfahren offenbart sind und umgekehrt.

In einer vorteilhaften Ausführungsform erfolgt eine Änderung des einem zu kontrollierenden Behältnis zugeordneten Bildelementes, auf das hin dieses Behältnis kontrolliert werden soll, über eine Änderung der Zuordnung und ohne Übermittlung eines Bildelementes.

In einer weiteren vorteilhaften Ausführungsform wird die Auswahl des zu kontrollierenden Bildelements durch die Direktdruckmaschine in Abhängigkeit des gedruckten Bildelements vorgegeben.

In einer weiteren vorteilhaften Ausführungsform ist das zu kontrollierenden Bildelement im Speicher des Kontrollgeräts hinterlegt.

In einer weiteren vorteilhaften Ausführungsform weist der Satz von zu kontrollierenden ersten Bildelementen weniger als 200, bevorzugt weniger als 100, bevorzugt weniger als 90 und besonders bevorzugt weniger als 80 Bildelemente auf.

Bevorzugt zusätzlich und besonders bevorzugt in Transportrichtung der Behältnisse stromaufwärts angeordnet, kann eine Vorrichtung zum bevorzugt sequentiellen und bevorzugt mehrfarbigen Bedrucken von einer Vielzahl von Behältnissen vorgesehen sein, die eine Transporteinrichtung aufweist, welche die zu bedruckenden Behältnisse entlang eines vorgegebenen Transportpfads insbesondere vereinzelt und nacheinander einer Druckeinrichtung bzw. einer Direktdruckmaschine mit wenigstens einem Druckaggregat und bevorzugt wenigstens zwei Druckaggregaten zuführt und/oder abführt, mit einem ersten Druckaggregat, welches die Behältnisse sequentiell mit jeweils wenigstens einem ersten Bildelement bedruckt, welches aus einem vorgegebenen und in einer Speichereinrichtung des ersten Druckaggregats abgelegten Satz von ersten Bildelementen entsprechend einer vorgegebenen Abfolge von zu druckenden ersten Bildelementen ausgewählt ist, und bevorzugt mit einem zweiten Druckaggregat, welches die bereits mit wenigstens einem ersten Bildelement bedruckten Behältnisse, bevorzugt sequentiell, mit jeweils wenigstens einem zweiten Bildelement bedruckt, welches aus einem vorgegebenen und in einer Speichereinrichtung des zweiten Druckaggregats abgelegten Satz von zweiten Bildelementen entsprechend einer vorgegebenen Abfolge von zu druckenden zweiten Bildelementen ausgewählt ist. Bevorzugt ist daher eine Abfolge von (ersten bzw. zweiten) Bildelementen vorgegeben bzw. eine solche bevorzugt ebenfalls in einer Speichereinrichtung abgelegt, in der die (ersten bzw. zweiten) Bildelemente (als Druckbild) auf einander nachfolgende Behältnisse aufgebracht werden. Dabei können die abgelegten (ersten bzw. zweiten) Bildelemente (in einem Druckvorgang) (wenigstens) eines Druckaggregates alleine oder auch zusammengesetzt mit wenigstens einem weiteren (ersten bzw. zweiten) Bildelement (als Druckbild) auf ein zu bedruckendes Behältnis aufgebracht werden. Die Anmelderin behält sich vor, eine derartige Vorrichtung zum Bedrucken einer Vielzahl von Behältnissen einzeln oder in Kombination mit einer Kontrolleinrichtung und/oder einem in Zusammenhang mit der Kontrolleinrichtung beschriebenen Merkmal einzeln oder in Kombination zu beanspruchen.

Bevorzugt weist die Vorrichtung zum Bedrucken einer Vielzahl von Behältnissen eine Interaktionseinrichtung auf, die bevorzugt dazu geeignet und bestimmt ist, die vorgegebene Abfolge von zu druckenden Bildelementen von wenigstens einem Druckaggregat und bevorzugt von wenigstens zwei Druckaggregaten (und bevorzugt allen Druckaggregaten) der Druckeinrichtung bzw. Direktdruckmaschine zu ändern und/oder den in der Speichereinrichtung eines jeweiligen Druckaggregats abgelegten Satz von Bildelementen zu modifizieren. Die Verwendung der Interaktionseinrichtung bietet vorteilhaft die Möglichkeit, variable Bilddaten einzusetzen. So kann beispielsweise die Interaktionseinrichtung die Reihenfolge von voneinander verschiedenen Bildelementen, mit denen die zu bedruckenden Behältnisse bedruckt werden, ändern oder ein Bildelement durch ein neues Bildelement austauschen. Unter der Änderung der Abfolge von zu druckenden Bildelementen wird bevorzugt auch verstanden, dass nicht nur die Reihenfolge, in der die Bildelemente oder zusammengesetzte Bildelemente (als Druckbild) nacheinander auf die zu bedruckenden Behältnisse aufgebracht bzw. aufgedruckt geändert wird, sondern auch, dass zwar die "Basis" an Bildelementen, aus der die Bildelemente ausgewählt werden, gleich bleibt, dass aber die Sequenz von aus Bildelementen oder zusammengesetzten Bildelementen bestehenden Druckbilder, die nacheinander auf die zu bedruckenden Behältnisse aufgebracht werden, geändert wird. Liegen also beispielsweise in dem Satz von (zu druckenden) Bildelementen drei voneinander verschiedene Label bzw. Bildelemente vor, die der Anschaulichkeit halber mit A, B und C bezeichnet werden, und werden zunächst zwei Behältnisse mit dem A-Bildelement, dann die nachfolgenden drei Behältnisse mit dem Bildelement B und das nächstfolgende Behältnis mit dem Bildelement C bedruckt, kann durch die Interaktionseinrichtung die Abfolge von zu druckenden Bildelemente dahingehend geändert werden, dass etwa auch (lediglich) nur die Anzahl Behältnisse, die mit einem bestimmten Bildelement, in dem Beispiel etwa mit dem Bildelement B, bedruckt werden, geändert wird. In dem genannten Beispiels kann die Interaktionseinrichtung derartige Änderungen vornehmen, dass zunächst wieder zwei Behältnisse mit dem A-Bildelement, dann die nachfolgenden vier Behältnisse mit dem Bildelement B und das nächstfolgende Behältnis mit dem Bildelement C bedruck wird.

Unter einem Satz von (ersten bzw. zweiten) Bildelemente ist dabei mindestens ein (erstes bzw. zweites) Bildelement und bevorzugt eine Vielzahl von (ersten bzw. zweiten) Bildelementen zu verstehen. Dabei handelt es sich bevorzugt um weniger als 200, bevorzugt um weniger als 100, bevorzugt um weniger als 90 und besonders bevorzugt um weniger als 80 voneinander verschiedene (erste bzw. zweite) Bildelemente. Eine mengenmäßige Beschränkung der Anzahl der (ersten bzw. zweiten) Bildelemente bietet den Vorteil, die erforderliche Speichergröße der Speichereinrichtung(en), in dem diese abgelegt sind, möglichst klein halten zu können. Trotz alledem ist durch die durch die vorgeschlagene Erfindung, insbesondere durch die Interaktionseinrichtung, erzielte Variabilität dieser Bildelemente eine hohe Flexibilität bzw. Anpassungsmöglichkeit geboten. Bevorzugt wird jedes dieser (ersten bzw. zweiten) Bildelemente von der Druckeinrichtung bzw. von der Direktdruckmaschine als Druckbild auf mindestens einem der zu bedruckenden Behältnisse aufgebracht. Bevorzugt sind die Bildelemente (jeweils) in einem Rastergrafikformat bzw. bevorzugt als RIP-Datei in einer Speichereinrichtung der Druckeinrichtung bzw. der Direktdruckmaschine bzw. eines Druckaggregats der Druckeinrichtung bzw. der Direktdruckmaschine abgelegt. Denkbar wäre aber auch, dass die Bildelemente in einem Vektorgrafikformat abgelegt sind und bevorzugt eine Umrechnung in ein Rastergrafikformat in der Druckeinrichtung bzw. der Direktdruckmaschine erfolgt.

Bevorzugt weist die Druckeinrichtung bzw. die Direktdruckmaschine mehr als zwei Druckaggregate auf. Bevorzugt ist dabei für jedes Druckaggregat jeweils ein Satz von Bildelementen abgelegt. Im Folgenden können sich dabei die Merkmale bzw. vorteilhaften Ausführungsformen, wenn der jeweilige Satz von Bildelemente nicht weiter spezifiziert wird, auf einige (bevorzugt aber nicht alle) der Druckaggregate der Druckeinrichtung bzw. der Direktdruckmaschine, besonders bevorzugt aber auf alle Druckaggregate der Druckeinrichtung bzw. der Direktdruckmaschine beziehen.

Unter dem Modifizieren eines Satzes von Bildelementen ist dabei bevorzugt zu verstehen, dass dieser beispielsweise um wenigstens ein, bevorzugt genau ein Bildelement und besonders bevorzugt um wenigstens zwei Bildelemente erweitert und/oder um wenigstens ein, bevorzugt genau ein Bildelement und besonders bevorzugt um wenigstens zwei Bildelemente verringert wird. Ferner ist darunter zusätzlich oder alternativ zu verstehen, dass wenigstens ein oder mehrere Bildelemente ausgetauscht werden können. In dem oben genannten Beispiel könnte etwa das Bildelement C durch ein neues Bildelement D ausgetauscht werden und der Satz von (zu druckenden) Bildelementen nunmehr aus den Bildelementen A, B und D bestehen.

Wie eingangs erläutert ist die vorgeschlagene Vorrichtung besonders geeignet und für den Direktdruck auf Behältnisse mit unterschiedlich dreidimensional geformten bzw. ausgestalteten Oberflächen bestimmt, wobei das Behältnis bevorzugt Oberflächenstrukturen wie Rillen, Erhebungen und/oder anderweitige dreidimensionale Ornamente aufweisen kann.

In einer vorteilhaften Ausführungsform handelt es sich bei der Druckeinrichtung um eine Direktdruckeinrichtung bzw. eine Direktdruckmaschine, die mittels ihrer Druckaggregate die Behältnisse direkt bedruckt, mit anderen Worten erfolgt bevorzugt ein Farbauftrag direkt auf der Behältnisoberfläche und besonders bevorzugt nicht auf einem Etikett. Bevorzugt ist die Druckeinrichtung bzw. die Direktdruckmaschine bzw. wenigstens ein Druckaggregat der Druckeinrichtung bzw. der Direktdruckmaschine und besonders bevorzugt sind alle Druckaggregate der Druckeinrichtung bzw. der Direktdruckmaschine dazu geeignet und bestimmt, einen Rundumdruck des zu bedruckenden Behältnisses durchzuführen. Bevorzugt ist die Druckeinrichtung bzw. die Direktdruckmaschine bzw. wenigstens ein Druckaggregat der Druckeinrichtung bzw. der Direktdruckmaschine und besonders bevorzugt sind alle Druckaggregate der Druckeinrichtung bzw. der Direktdruckmaschine zu einem digitalen Druckverfahren geeignet und bestimmt. Bevorzugt erfolgt eine sortenabhängige, automatische Verstellung der Druckaggregate bzw. der Druckeinrichtung bzw. der Direktdruckmaschine, besonders bevorzugt in Abhängigkeit (wenigstens) eines (abgelegten) Satzes von Bildelementen bzw. einer vorgegebenen Abfolge von zu druckender Bildelemente. Die sortenabhängige Verstellung kann aber auch in Abhängigkeit von einem Behältnistyp erfolgen.

Bevorzugt ist die Druckeinrichtung bzw. die Direktdruckmaschine dazu geeignet und bestimmt, wenigstens 10.000, bevorzugt wenigstens 20.000 und besonders bevorzugt wenigstens 40.000 Behältnisse pro Stunde zu bedrucken.

In einer weiteren vorteilhaften Ausführungsform ist die Vorrichtung zum Bedrucken einer Vielzahl von Behältnissen bzw. die Interaktionseinrichtung dazu geeignet und bestimmt, ohne Unterbrechung des Druckbetriebs wenigstens eines Druckaggregates und insbesondere während eines Druckvorgangs dieses Druckaggregates, die vorgegebene Abfolge der (nachfolgend) zu druckenden Bildelementen dieses Druckaggregates bzw. von wenigstens dem ersten Druckaggregat der Druckeinrichtung bzw. der Direktdruckmaschine zu ändern und/oder den in der Speichereinrichtung eines jeweiligen Druckaggregats abgelegten Satz von Bildelementen zu modifizieren. Dabei werden hierzu bevorzugt keine den Bildinhalt betreffende Informationen übermittelt, sondern bevorzugt lediglich eine (geänderte oder neue) Anordnung in der (vorgegebenen) Abfolge von zu druckenden ersten Bildelementen und/oder eine Zahlenangabe, die beispielsweise für eine Anzahl charakteristisch ist, wie oft ein bestimmtes Behältnis bzw. ein bestimmter Behältnistyp (in Folge oder innerhalb einer Charge) der Druckeinrichtung bzw. der Direktdruckmaschine zugeführt wird und/oder bevorzugt eine Angabe, die charakteristisch ist für eine absolute oder relative Anordnung, an der sich ein bestimmter Behältnistyp in der Zufuhr der Vielzahl von Behältnissen (relativ zu anderen Behältnistypen) befindet. Bevorzugt ist die Vorrichtung dazu geeignet und bestimmt, ohne Unterbrechung des Behältnistransports durch die Transporteinrichtung die vorgegebene Abfolge der zu druckenden Bildelemente insbesondere für die von der Transporteinrichtung noch nicht an die Druckeinrichtung bzw. an die Direktdruckmaschine zugeführten Behältnisse zu ändern und/oder für diese noch nicht zugeführten Behältnisse eine Modifizierung des Satzes von Bildelementen zu modifizieren. Es kann dabei vorteilhaft sein, dass die Interaktionseinrichtung erst die Bedruckung ab denjenigen Behältnissen ändert, die erst später als das fünftnächste, bevorzugt als das zehntnächste und besonders bevorzugt als das 50-nächste Behältnis der Druckeinrichtung bzw. der Direktdruckmaschine zugeführt werden.

In einer weiteren vorteilhaften Ausführungsform ist die Interaktionseinrichtung dazu geeignet und bestimmt, in wenigstens einem Druckaggregat eine Modifizierung des in dessen Speichereinrichtung abgelegten Satzes von Bildelementen und/oder eine Änderung der vorgegebenen Abfolge der zu druckenden Bildelemente vorzunehmen, ohne Übertragung eines Bildelements an die Druckeinrichtung bzw. Direktdruckmaschine bzw. die Speichereinrichtung. Mit anderen Worten muss nicht die Bildinformation des Bildelementes übermittelt werden, sondern diese sind bereits in einer Speichereinrichtung abgelegt und das betreffende Bildelement wird bevorzugt (lediglich) neu in die Sequenz zu druckender Bildelemente miteingebunden bzw. an einer anderen Stelle der Abfolge zu druckender Bildelemente miteingebunden. Dies bietet den Vorteil, dass die zu transferierende Datenmenge möglichst klein gehalten werden kann, weil nicht die den Bildinhalt betreffende Datenmenge transferiert werden muss, sondern lediglich die Information, an welcher Stelle der Abfolge vorgegebener Bildelemente das betreffende Bildelement einzubinden ist.

In einer weiteren vorteilhaften Ausführungsform ist die Kontrolleinrichtung und/oder die Vorrichtung zum Bedrucken dazu konfiguriert, eine Kommunikationsverbindung mit einem externen Netzwerk (Internet und/oder Intranet) aufzubauen, und über diese Kommunikationsverbindung, bevorzugt über die Interaktionseinrichtung, Anweisungen bezüglich der in der Speichereinrichtung der Kontrolleinrichtung und/oder eines Druckaggregates abgelegten Bildelemente zu empfangen. Diese Anweisungen können etwa eine Änderung der vorgegebenen Abfolge der zu kontrollierenden und/oder zu druckenden Bildelemente und/oder den Satz von (zu kontrollierenden und/oder zu druckenden) Bildelemente betreffen. Damit ist es etwa möglich, Bildelemente online auszutauschen und/oder den Satz von (zu kontrollierenden und/oder zu druckenden) Bildelementen online zu modifizieren. Dies bietet den Vorteil, dass die Steuerung der Kontrolleinrichtung und/oder der Druckeinrichtung bzw. der Direktdruckmaschine in ein (bestehendes) Netzwerk eingebunden werden kann.

In einer weiteren vorteilhaften Ausführungsform wird in Reaktion auf die empfangenen Anweisungen die Abfolge der zu druckenden Bildelemente wenigstens eines abgelegten Satzes von Bildelementen wenigstens eines Druckaggregates und/oder wenigstens ein Bildelement wenigstens eines abgelegten Satzes von Bildelementen wenigstens eines Druckaggregates modifiziert. Bevorzugt erfolgt dies ebenfalls, ohne das Bildelement selbst zu übermitteln.

In einer weiteren vorteilhaften Ausführungsform ist die Interaktionseinrichtung dazu geeignet und bestimmt, wenigstens zwei, bevorzugt an wenigstens drei Druckaggregaten insbesondere im Wesentlichen zeitgleich in gleicher Weise die Abfolge der in den jeweiligen Druckaggregaten abgelegten Sätze von zu druckenden Bildelementen zu ändern und/oder in gleicher Weise den in den jeweiligen Druckaggregaten abgelegten Satz von zu druckenden Bildelementen zu modifizieren und/oder in gleicher Weise den abgelegten Satz von zu kontrollierenden (ersten) Bildelementen (bzw. deren Abfolge bzw. eine Zuordnung dieser Bildelemente mit den Behältnissen) in der Kontrolleinrichtung zu modifizieren. Bevorzugt erfolgt eine derartige zeitgleich in gleicher Weise erfolgende Änderung bzw. Modifizierung so, dass sich diese Änderungen bzw. Modifizierungen auf dasselbe zu bedruckende Behältnis bzw. auf dieselben zu bedruckenden Behältnisse und bevorzugt auch auf dasselbe zu kontrollierende, dann bereits bedruckte Behältnis auswirken.

In einer weiteren vorteilhaften Ausführungsform bedrucken wenigstens zwei Druckaggregate und bevorzugt alle Druckaggregate der Druckeinrichtung bzw. der Direktdruckmaschine die zu bedruckenden Behältnisse mit wenigstens zwei, bevorzugt wenigstens vier und besonders bevorzugt genau vier voneinander verschiedenen Bildelementen, von denen wenigstens ein Bildelement auf mehrere nacheinander folgende Behältnisse aufgebracht wird und wenigstens ein Bildelement bezüglich aufeinander folgender Behältnisse variiert wird. Die Variation ist bevorzugt steuerbar bzw. beeinflussbar über die Interaktionseinrichtung. Dabei kann auch ein von einem Druckaggregat aufgebrachtes Druckbild aus mehreren Bildelementen zusammengesetzt sein. Mit anderen Worten ist die Druckeinrichtung bzw. die Direktdruckmaschine derart konfiguriert, dass die Behältnisse an demselben Bereich mit verschiedenen Druckbildern versehen werden können.

Bevorzugt ist in Transportrichtung der Behältnisse der Druckeinrichtung bzw. der Direktdruckmaschine und besonders bevorzugt auch einer (der Druckeinrichtung bzw. der Direktdruckmaschine nachgeordnete) Kontrolleinrichtung wenigstens eine Fülleinrichtung zum Befüllen der bedruckten Behältnisse nachgeordnet. Bevorzugt ist die Fülleinrichtung dazu geeignet und bestimmt, die Behältnisse je nach unterschiedlicher Bedruckung mit unterschiedlichem Befüllungsinhalt zu befüllen. Bevorzugt kann die Fülleinrichtung die Behältnisse mit wenigstens zwei verschiedenen, bevorzugt mit wenigstens vier verschiedenen und besonders bevorzugt mit genau vier verschiedenen Befüllungsinhalten bzw. Getränken befüllen.

Dabei kann die Fülleinrichtung ebenfalls Zugriff haben (bevorzugt über die Netzwerkeinrichtung) auf die vorgegebene Abfolge an zu druckenden Bildelementen bzw. auf den Satz zu druckender Bildelemente und/oder auf den Satz zu kontrollierender (erster) Bildelemente der Kontrolleinrichtung. Diese Informationen können aber auch in einer Speichereinrichtung der Fülleinrichtung abgelegt sein und/oder von einer Interaktionseinrichtung an die Fülleinrichtung übermittelt werden.

In einer weiteren vorteilhaften Ausführungsform bedrucken das erste und das zweite Druckaggregat und insbesondere die jeweiligen Druckaggregate der Druckeinrichtung bzw. der Direktdruckmaschine die Behältnisse in jeweils genau einer Farbe, die sich von den Druckfarben der jeweils anderen Druckaggregate unterscheidet. Bevorzugt ist mit den Druckfarben aller Druckaggregate das sichtbare/visuelle Farbspektrum abdeckbar. Bevorzugt verwendet wenigstens ein Druckaggregat der Druckeinrichtung bzw. der Direktdruckmaschine und besonders bevorzugt verwenden alle Druckaggregate der Direktdruckmaschine eine Tinte, die sich unter UV-Licht-Einstrahlung härten lässt. Bevorzugt weist die Druckeinrichtung bzw. die Direktdruckmaschine wenigstens (bevorzugt genau) fünf Druckaggregate auf, die bevorzugt jeweils eine unterschiedliche Druckfarbe verwenden, die besonders bevorzugt ausgewählt ist aus einer Gruppe von fünf Farben, die CMYK und weiß enthält. Bevorzugt können bis zu sechs verschieden Farben durch die Druckaggregate aufgebracht werden. Bevorzugt ist wenigstens ein Druckaggregat, besonders bevorzugt sind alle Druckaggregate dazu geeignet und bestimmt, mehr als eine Tropfengröße, bevorzugt mehr als zwei, bevorzugt mehr als drei und besonders bevorzugt vier verschiedene Tropfengrößen auf das zu bedruckende Objekt aufzubringen.

In einer weiteren vorteilhaften Ausführungsform weist die Druckeinrichtung bzw. die Direktdruckmaschine wenigstens drei, bevorzugt wenigstens vier, bevorzugt wenigstens sechs und besonders bevorzugt wenigstens 15 Druckaggregate und weniger als 25 und bevorzugt weniger als 20, bevorzugt weniger als 19, bevorzugt genau 18, bevorzugt weniger als 7, bevorzugt genau sechs Druckaggregate bzw. Druckköpfe auf. Bevorzugt hängt die Anzahl der aktiven Druckaggregate von der Behältnishöhe bzw. der Druckhöhe ab. Bevorzugt werden etwa bei einer Behältnishöhe bzw. Druckhöhe von bis zu 10 cm (bis zu) sechs Druckaggregate bzw. Druckköpfe und bei einer Behältnishöhe bzw. Druckhöhe von etwa 20 cm (bis zu) 18 Druckaggregate bzw. Druckköpfe verwendet.

Die vorliegende Erfindung ist weiterhin auf ein Verfahren zum sequentiellen und bevorzugt mehrfarbigen Bedrucken von einer Vielzahl von Behältnissen gerichtet, wobei die zu bedruckenden Behältnisse, insbesondere mit einer Transporteinrichtung, entlang eines vorgegebenen Transportpfads insbesondere vereinzelt und nacheinander einer Druckeinrichtung bzw. einer Direktdruckmaschine mit wenigstens zwei Druckaggregaten zugeführt und/oder abgeführt werden, wobei die Behältnisse, bevorzugt sequentiell, mit einem ersten Druckaggregat mit jeweils wenigstens einem ersten Bildelement bedruckt werden, welches aus einem vorgegebenen und in einer Speichereinrichtung des ersten Druckaggregats abgelegten Satz von ersten Bildelementen entsprechend einer vorgegebenen Abfolge von zu druckenden ersten Bildelementen ausgewählt ist, und wobei die bereits mit wenigstens einem ersten Bildelement bedruckten Behältnisse sequentiell mit einem zweiten Druckaggregat mit jeweils wenigstens einem zweiten Bildelement bedruckt werden, welches aus einem vorgegebenen und in einer Speichereinrichtung des zweiten Druckaggregats abgelegten Satz von zweiten Bildelementen entsprechend einer vorgegebenen Abfolge von zu druckenden zweiten Bildelementen ausgewählt ist.

Es wird also auch im Rahmen des erfindungsgemäßen Verfahrens vorgeschlagen, dass die vorgegebene Abfolge von zu druckenden Bildelementen von wenigstens zwei Druckaggregaten der Druckeinrichtung bzw. der Direktdruckmaschine über eine Interaktionseinrichtung geändert wird und/oder der in der Speichereinrichtung eines jeweiligen Druckaggregats abgelegte Satz von Bildelementen über eine Interaktionseinrichtung modifiziert wird. Dabei kann das Verfahren mit allen im Kontext mit der Vorrichtung beschriebenen Merkmalen bzw. allen Merkmalskombinationen ausgestattet sein und umgekehrt.

In einer vorteilhaften Ausführungsform wird ohne Unterbrechung des Druckbetriebs eines Druckaggregates und insbesondere während eines Druckvorgangs dieses Druckaggregates die vorgegebene Abfolge der nachfolgend zu druckenden Bildelementen dieses Druckaggregate über die Interaktionseinrichtung geändert und/oder wird der in der Speichereinrichtung eines jeweiligen Druckaggregats abgelegten Satz von Bildelementen über die Interaktionseinrichtung modifiziert.

Bevorzugt ist in der Speichereinrichtung der Kontrolleinrichtung wenigstens ein Satz von zu kontrollierenden und/oder wenigstens der Satz von zu druckenden ersten Bildelementen und bevorzugt auch der Satz von zu kontrollierenden und/oder zu druckenden zweiten Bildelementen und besonders bevorzugt die Sätze von zu druckenden Bildelementen aller Druckaggregate abgelegt bzw. eine Überlagerung dieser Sätze von Bildelementen abgelegt, wobei die Kontrolleinrichtung eine Kontrolle des Bildelementes bzw. Druckbildes unter Berücksichtigung des in der Speichereinrichtung abgelegten Satzes von zu druckenden und/oder zu kontrollierenden (ersten) Bildelementen bzw. Druckbildern vornimmt. Bei der Speichereinrichtung handelt es sich insbesondere um eine nicht flüchtigen Datenspeicher wie einer HD bzw. Cloud.

Bevorzugt ist durch die Kontrolleinrichtung ein Wert ermittelbar, der (insbesondere von einem Benutzer) dahingehend ausgewertet werden kann bzw. anhand von dem entschieden werden kann, ob der von der Druckeinrichtung bzw. Direktdruckmaschine aufgebrachte Druck korrekt erfolgt ist und/oder ob das auf dem zu kontrollierenden Behältnis angeordnete Bildelement korrekt angeordnet ist und/oder dem anzuordnenden bzw. zu bedruckenden Bildelement entspricht. Bevorzugt nimmt die Kontrolleinrichtung eine punktuelle Überprüfung von Farbabweichungen, beispielsweise mittels kalibrierter (Delta E) oder nicht kalibrierter Messung vor.

Bevorzugt stimmt der Satz zu kontrollierender Bildelemente mit einem Satz zu druckender Bildelemente oder mit einem Satz aus überlagerten Bildelementen, die aus den Sätzen unterschiedlicher Druckaggregate stammen, überein. Denkbar ist aber auch, dass der Satz zu kontrollierender Bildelemente aus einem Satz oder mehreren Sätzen zu druckender Bildelemente (bevorzugt rechnerisch) abgeleitet wird. So kann dabei eine Oberflächenkrümmung des bedruckten Behältnisses berücksichtigt und als Verzerrung des von einer Inspektionseinrichtung erfassten bzw. zu erfassenden auf dem zu kontrollierenden Behältnis angeordneten Bildelementes miteingerechnet werden.

Es ist aber auch möglich, dass der in der Speichereinrichtung der Kontrolleinrichtung abgelegte Satz zu kontrollierender Bildelemente aus einer (bzw. einem Satz von), bevorzugt durch eine Inspektionseinrichtung (Kamera) der Vorrichtung bzw. der Kontrolleinrichtung, erfassten Aufnahme(n) eines an einem Behältnis angeordneten Bildelementes erstellt ist/besteht. Denkbar ist daher auch, dass die Kontrolleinrichtung die Kontrolle unter Berücksichtigung eines aufgenommenen Bildes wenigstens eines Abschnitts des bedruckten Behältnisses vornimmt.

In einer vorteilhaften Ausführungsform nimmt die Kontrolleinrichtung für jedes zu kontrollierende Behältnis eine Kontrolle des angeordneten Bildelementes unter Berücksichtigung eines diesem Behältnis, bevorzugt eindeutig, zugeordneten zu kontrollierenden Bildelement oder einer diesem Behältnis, bevorzugt eindeutig, zugeordneten Zusammensetzung von zu kontrollierenden Bildelementen aus dem Satz von zu kontrollierenden (ersten) Bildelementen vor.

Es wird daher vorgeschlagen, dass eine ausreichende Zahl an Master-Prints bzw. Bildelementen bzw. Druckbildern in der Kontrolleinrichtung geladen bzw. abgelegt sind. Eine ausreichende Zahl an Master-Prints bzw. Druckbildern bedeutet, dass alle Prints bzw. Bildelemente bzw. Druckbildern, die in nächster Zeit produziert werden, durch vorrätige Master-Prints bzw. Bildelemente bzw. Druckbilder in der Kontrolleinrichtung geladen bzw. abgelegt sind. Vorteilhaft ist, dass hierdurch die gleiche Flexibilität wie in der Druckvorrichtung erreicht wird. So können mehrere Master-Prints bzw. Druckbilder in der Kontrolle im Voraus hinterlegt werden und schritthaltend mit der Produktionsleistung der Behältnis-Bedruckungsvorrichtung bzw. Druckeinrichtung bzw. Direktdruckmaschine abgearbeitet werden.

Bevorzugt wird der Prüfling bzw. das von der Kontrolleinrichtung zu kontrollierende (bedruckte) Behältnis gegen eine definierte Auswahl an Master-Prints bzw. Bildelemente bzw. Druckbilder geprüft. Eine definierte Auswahl an Master-Prints bzw. Bildelemente bzw. Druckbilder bedeutet bevorzugt, dass das bedruckte Behältnis gegen einen, insbesondere eineindeutigen, Satz an Master-Prints bzw. Bildelemente bzw. Druckbilder kontrolliert wird. Ein eineindeutiger Satz an Master-Prints bzw. Druckbilder bzw. Bildelemente kann nur eine einzige, den ganzen Print abdeckende Vorlage (von Druckbildern bzw. von Bildelementen) sein oder auch zusammengesetzte Vorlagen (von Druckbildern bzw. von Bildelementen) sein.

In einer weiteren vorteilhaften Ausführungsform weist die Vorrichtung eine Interaktionseinrichtung auf, die dazu geeignet und bestimmt ist, die vorgegebene Abfolge von zu druckenden Bildelementen von wenigstens zwei Druckaggregaten der Druckeinrichtung bzw. Direktdruckmaschine zu ändern und/oder den in der Speichereinrichtung eines jeweiligen Druckaggregats abgelegten Satz von Bildelementen zu modifizieren. Bevorzugt ist die Vorrichtung bzw. die Interaktionseinrichtung dazu geeignet und bestimmt, in entsprechender Weise, d.h. in einer einer in der Druckeinrichtung bzw. Direktdruckmaschine erfolgten bzw. vorgenommenen bzw. erfolgenden bzw. vorzunehmenden Änderung der vorgegebenen Abfolge zu druckender Bildelemente und/oder einer Modifizierung des Satzes zu druckender Bildelemente korrespondierender Weise, ebenfalls in der Kontrolleinrichtung Änderungen bzw. Modifizierungen vorzunehmen.

In einer weiteren vorteilhaften Ausführungsform weist die Vorrichtung eine Interaktionseinrichtung mit einer Kommunikationsverbindung zwischen der Druckeinrichtung bzw. der Direktdruckmaschine und der Kontrolleinrichtung, insbesondere zwischen der Speichereinrichtung von wenigstens einem Druckaggregat (und bevorzugt zwischen den Speichereinrichtungen aller Druckaggregate der Druckeinrichtung bzw. Direktdruckmaschine) und der Speichereinrichtung der Kontrolleinrichtung, auf. Bevorzugt werden über die Kommunikationseinrichtung Änderungen der vorgegebenen Abfolge zu druckender Bildelemente und/oder zu kontrollierender Bildelemente bevorzugt wechselseitig miteinander abgeglichen. Bevorzugt ist die Vorrichtung derart geeignet und bestimmt, dass insbesondere über die Kommunikationseinrichtung ein (übergeordneter) Druckprozess die Abfolge der hinterlegten Druckbilder/Master-Prints bzw. der vorgegebenen Abfolge abgelegter Bildelemente sowohl mit der Druckeinrichtung bzw. Direktdruckmaschine bzw. mit dessen Druckaggregaten als auch mit dem Kontrollsystem bzw. mit der Kontrolleinrichtung austauscht. Es ist denkbar, dass das übergeordnete System bzw. der übergeordnete Druckprozess den zeitlichen und/oder örtlichen Versatz zwischen der Druckbildentstehung, als auch der Bildelementkontrolle bzw. der Druckbildkontrolle ausgleicht. Denkbar ist auch, dass dieser Ausgleich durch die Kontrolle bzw. die Kontrolleinrichtung gewährleistet wird bzw. vorgenommen wird.

Vorteilhaft ist, dass keine extrem aufwändigen Kommunikationsschnittstellen bzw. Kommunikationsverbindungen benötigt werden, die in Time den neuen Master-Print bzw. die neuen Druckbilder bzw. Bildelemente laden. Somit muss die Kommunikationsschnittstelle nicht hoch verfügbar sein, kann z.B. bei geeigneten Schnittstellenprotokollen Kommunikationsfehler selbst erkennen und durch wiederholtes Senden der korrupten Pakete eigenständig korrigieren, wie es z.B. bei gängigen Netzwerkprotokollen gegeben ist.

In einer weiteren vorteilhaften Ausführungsform nimmt die Kontrolleinrichtung eine Kontrolle wenigstens eines Bildelementes bzw. Druckbildes eines zu kontrollierenden Behältnisses unter Berücksichtigung von genau einem Bildelement bzw. Druckbild aus dem in der Speichereinrichtung abgelegten Satz von zu druckenden ersten Bildelementen bzw. Druckbildern vor. Bevorzugt erfolgt damit eine Kontrolle gegen eineindeutigen Satz an Masterprints bzw. Bildelementen.

Vorteilhaft ist, dass jeder Prüfling bzw. jedes zu kontrollierende Behältnis gegen einen eineindeutigen Master-Print (Satz) bzw. ein eineindeutiges Bildelement bzw. Druckbild (aus einem Satz von Bildelementen) geprüft wird. So ist es nun sicher zu unterscheiden, ob bezugnehmend auf das eingangs genannte Beispiel auf dem Prüfling "Color" oder "Colour" abgebildet sein soll. Vorteilhaft ist, dass eineindeutig geprüft wird, ob beispielhaft auf der Rückseite des Behälters die Schoko-Zutatenliste aufgebracht sein muss.

Bevorzugt können die Master-Prints bzw. die in der Speichereinrichtung abgelegten zu kontrollierenden Bildelemente insbesondere während eines Betriebs der Vorrichtung bzw. der Druckeinrichtung bzw. der Direktdruckmaschine und/oder der Kontrolleinrichtung vorteilhaft online (via der Netzwerkeinrichtung bzw. der Kommunikationseinrichtung) ausgetauscht werden. Dabei werden Master-Prints bzw. zu kontrollierende Bildelemente, die in naher Zukunft (d.h. bevorzugt für eine vorgegebene Anzahl zu bedruckender bzw. zu kontrollierender Behältnisse) nicht benötigt werden, entladen - falls vorhanden - und durch solche ausgetauscht bzw. geladen, die in naher Zukunft benötigt werden. Bevorzugt kann parallel die Kontrolle gegen die aktuell notwendigen Prints bzw. Bildelemente der aktuellen (bevorzugt in der Kontrolleinrichtung befindlichen zu kontrollierenden) Behältnisse erfolgen.

Bevorzugt sind in Transportrichtung der Behältnisse gesehen der Druckeinrichtung bzw. der Direktdruckmaschine folgende Behältnisbehandlungseinrichtungen nachgeordnet: eine Aushärtungseinrichtung, in der der auf die zu bedruckenden Behältnisse von der Druckeinrichtung bzw. Direktdruckmaschine aufgebrachte Farbauftrag bevorzugt mittels Beaufschlagung von UV-Strahlung ausgehärtet wird, und/oder die Kontrolleinrichtung zur Kontrolle des von der Druckeinrichtung bzw. Direktdruckmaschine aufgebrachten Aufdrucks des Behältnisses, bei dem bevorzugt kontrolliert wird, ob ein fehlerhafter Druck produziert wurde) und/oder eine Fülleinrichtung, welche die bedruckten Behältnisse befüllt, und/oder eine Verschließeinrichtung, welche die Behältnisse verschließt, und/oder eine Verpackungseinrichtung, welche ein Behältnis oder mehrere Behältnisse verpackt.

In einer weiteren vorteilhaften Ausführungsform wird in Abhängigkeit von dem Ergebnis der von der Kontrolleinrichtung vorgenommenen Kontrolle eines zu kontrollierenden Behältnisses und/oder einer (weiteren) Kontrolleinrichtung einer der Druckeinrichtung bzw. Direktdruckmaschine, bevorzugt nachgeordneten, Behältnisbehandlungseinrichtung wenigstens ein Signal an die Druckeinrichtung bzw. Direktdruckmaschine übermittelt. Ein derartiges Signal kann zur Informationsübermittlung vorgesehen sein, dass ein bestimmtes Behältnis, welches etwa als fehlerhaft eingestuft worden ist und/oder welches aus dem weiteren Behandlungsvorgang entfernt/ausgestoßen worden ist oder entfernt/ausgestoßen werden wird, nachproduziert werden soll/muss. Ein derartiger Fehler kann in weiteren Prozessschritten bis zur Auslieferung des Produkts auftreten. Bevorzugt kann auf diese durch eine (flexible) Nachproduktion mittels einer Änderung der Abfolge der zu druckenden Bildelemente und/oder einer Modifizierung des abgelegten Satzes von Bildelementen in einer oder mehreren und bevorzugt in allen Druckaggregaten der Druckeinrichtung bzw. Direktdruckmaschine (und besonders bevorzugt in allen nachfolgenden, beispielsweise sorten- bzw. typabhängigen, Behältnisbehandlungseinrichtungen) reagiert werden. Bei den Fehlern kann es sich beispielsweise um das Produzieren eines fehlerhaften Drucks durch die Druckeinrichtung bzw. Direktdruckmaschine und/oder einen Füllfehler durch die Fülleinrichtung und/oder einen Verschließfehler und/oder einen Fehler beim Verpacken handeln. In jedem Prozessschritt können bestimmte (Behältnis-)Varianten "verloren" gehen und ein gezieltes Nachproduzieren derjenigen (bevorzugt im Batch) erfordern. Insbesondere ist eine derartige flexible Nachproduktion bei kleinen Chargen vorteilhaft.

In einer weiteren vorteilhaften Ausführungsform wird als Reaktion auf das (wenigstens eine und bevorzugt mehrere) übermittelte Signal hin die vorgegebene Abfolge von zu druckenden Bildelementen wenigstens eines Druckaggregates (bevorzugt aller betroffenen Druckaggregate) der Druckeinrichtung bzw. Direktdruckmaschine geändert und/oder wird ein in der Speichereinrichtung wenigstens eines Druckaggregats und bevorzugt aller (betroffenen) Druckaggregate abgelegter Satz von Bildelementen modifiziert. Diese Änderung und/oder Modifizierung bewirkt bevorzugt eine Nachproduktion mindestens eines als fehlerhaft oder unbrauchbar identifizierten Behältnisses.

Vorteilhaft ist die Flexibilisierung der Kontrolle. Entgegen einer starren, a priori definierten Abfolge (an Druckbildern bzw. Bildelementen), kann das Kontrollsystem den jeweils aktuellen Erfordernissen angepasst werden. Wird z.B. bei späteren Prozessschritten, die nach dem Druck erfolgen, ein Behältnis als unbrauchbar identifiziert, kann dieser dem Druckprozess rückgemeldet und individuell nachproduziert werden.

Bevorzugt weist die Vorrichtung eine Sortiereinrichtung auf, die in Transportrichtung gesehen, besonders bevorzugt der Druckeinrichtung bzw. Direktdruckmaschine und/oder der Kontrolleinrichtung nachgeordnet ist, und die die Behältnisse entsprechend ihres Typs bzw. Behältnisgröße bzw. Behältnisart in unterschiedliche Transportlinien einteilt bzw. sortiert. Bevorzugt kann die Druckeinrichtung bzw. Direktdruckmaschine Behältnisse unterschiedlichen Typs bedrucken. Die Sortiereinrichtung kann daher eine Sortierung der Behältnisse beispielsweise in Abhängigkeit eines verschieden aufgebrachten bzw. für dieses Behältnis charakteristischen Bildelementes bzw. Aufdrucks vornehmen.

Bevorzugt kann eine Kontrolleinrichtung in der Druckeinrichtung bzw. Direktdruckmaschine, bevorzugt innerhalb eines Gehäuses der Druckeinrichtung, angeordnet sein, wobei bevorzugt die Kontrolle des Drucks in der Druckeinrichtung bzw. Direktdruckmaschine erfolgt, und/oder eine Kontrolleinrichtung kann in Transportrichtung der Behältnisse gesehen der Druckeinrichtung bzw. der Direktdruckmaschine nachgeordnet und bevorzugt am Transportband bzw. an der Transporteinrichtung angeordnet sein, wobei eine Kontrolle des Drucks dann bevorzugt nach der Druckeinrichtung bzw. der Direktdruckmaschine "am Band" erfolgt, und/oder eine (weitere oder alternative) Kontrolleinrichtung kann in einer eigenen, bevorzugt fest installierten Inspektionsvorrichtung angeordnet sein.

Die vorliegende Erfindung ist weiterhin gerichtet auf eine Vorrichtung zum Behandeln von Behältnissen mit wenigstens einer ersten Behältnisbehandlungseinrichtung, die dazu geeignet und bestimmt ist, die zu behandelnden Behältnisse mit einer unterschiedlichen Dekoration zu versehen, und die zu behandelnden Behältnisse jeweils mit einer entsprechend einer vorgegebenen Dekorationsabfolge vorgesehenen Dekoration versieht, mit einer Transporteinrichtung, welche die von der ersten Behältnisbehandlungseinrichtung behandelten Behältnisse entlang eines vorgegebenen Transportpfads, bevorzugt vereinzelt und nacheinander, wenigstens einer Kontrolleinrichtung zum Kontrollieren der behandelten Behältnisse zuführt und/oder abführt.

Erfindungsgemäß ist die Kontrolleinrichtung dazu geeignet und bestimmt, die Behältnisse wenigstens auf die durch die erste Behältnisbehandlungseinrichtung angebrachte Dekoration hin zu kontrollieren und in Abhängigkeit von ihrem Kontrollergebnis eine Änderung der vorgegebenen Dekorationsabfolge wenigstens der ersten und/oder einer zweiten Behältnisbehandlungseinrichtung, bevorzugt einer Druckeinrichtung und/oder Direktdruckmaschine, vorzunehmen und/oder zu veranlassen. Dabei kann die Vorrichtung zum Behandeln von Behältnissen mit im Rahmen der obig beschriebenen Kontrolleinrichtung (bzw. Verfahren) und/oder der obig beschriebenen Vorrichtung (bzw. Verfahren) zum Bedrucken einer Vielzahl von Behältnissen beschriebenen Merkmalen einzeln oder in Kombination ausgestattet sein und umgekehrt.

Bevorzugt handelt es sich bei der Dekoration um eine produktspezifische Dekoration, die insbesondere unter anderem auf das Produkt hinweist, welches das Behältnis aufnehmen soll. Dabei kann die Dekoration, zusätzlich oder alternativ, auch eine insbesondere produktunabhängige Serieninformation aufweisen, etwa eine serienspezifische Farbe und/oder Nummer und/oder ein serienspezifisches Motiv. Bei der Dekoration kann es sich beispielsweise um ein Motiv, welches bevorzugt durch eine Direktdruckmaschine als Aufdruck auf das Behältnis aufgebracht wird, einen Verschluss für das Behältnis, welcher etwa in einer bestimmten Farbe gewählt sein kann, oder auch um ein Etikett, welches auf das Behältnis aufgebracht wird, handeln. In einem weiteren Sinne der Dekoration kann es sich auch um das abzufüllende Produkt handeln, etwa um eine vorgegebene Geschmackssorte, mit welchem das Behältnis durch eine Fülleinrichtung befüllt werden soll.

Die vorgeschlagene Vorrichtung bietet den Vorteil, dass, sobald etwa die Druckeinrichtung bzw. die Direktdruckmaschine einzelne Motive bzw. Dekorationen aus einer Abfolge von Motiven bzw. Dekorationen gezielt drucken kann, nicht ein komplettes Set der Abfolge gedruckt werden musst, wenn nur ein Teil davon benötigt wird. Der Vorteil wird umso deutlicher, je kleiner der Auftrag, die Anzahl der Abfolgen ist. Druckfehler, die die Druckeinrichtung bzw. Direktdruckmaschine selbst erkennen kann, etwa Behälter fehlt, Behälter schief eingespannt, Behälter verdreht .., kann die Druckeinrichtung bzw. die Direktdruckmaschine einfach erneut nachdrucken.

In einer vorteilhaften Ausführungsform ist die Kontrolleinrichtung dazu geeignet und bestimmt, in Abhängigkeit von dem Kontrollergebnis eine Nach- und/oder Zwischenproduktion wenigstens eines Behältnisses, bevorzugt mit der Dekoration des kontrollierten Behältnisses, zu veranlassen. Mit anderen Worten ist die Kontrolleinrichtung bevorzugt dazu geeignet und bestimmt, die im Falle einer Beurteilung des kontrollierten Behältnisses als nicht den Ansprüchen genügend, zu veranlassen, etwa durch Übermittlung eines Signals an eine (zentrale) Steuerungseinrichtung, dass wenigstens eine und bevorzugt alle Dekorationen identifiziert werden, mit der das kontrollierte Behältnis auszustatten war. Bevorzugt wird zudem veranlasst (etwa durch die Steuerungseinrichtung), dass ein (neues) Behältnis mit eben dieser Dekoration und bevorzugt mit all diesen Dekorationen ausgestattet wird.

In einer weiteren vorteilhaften Ausführungsform wird über eine Änderung der Dekorationsabfolge eine Änderung der Anzahl und Reihenfolge von der jeweils an die Behältnisse von wenigstens einer ersten Behältnisbehandlungseinrichtung, bevorzugt von mehreren Behältnisbehandlungseinrichtungen und besonders bevorzugt von allen Behältnisbehandlungseinrichtungen, die die Behältnisse mit verschiedenen Dekorationen ausstatten, anzubringenden Dekoration bewirkt. Bevorzugt wird eine derartige Änderung der Dekorationsabfolge über eine (zentrale) Steuerungseinrichtung und/oder (zumindest mittelbar) über die Kontrolleinrichtung bewirkt. Dabei kann etwa eine Dekorationsabfolge, in der die verschiedenen Dekorationen eines Sets nacheinander genau einmal auf die Behältnisse aufgebracht werden, derart geändert werden, dass entsprechend der geänderten Dekorationsabfolge zwei (bevorzugt unmittelbar nachfolgende) Behältnisse mit derselben Dekoration versehen werden.

In einer weiteren vorteilhaften Ausführungsform ist die wenigstens eine Behältnisbehandlungseinrichtung und/oder die wenigstens zweite Behältnisbehandlungseinrichtung ausgewählt aus einer Gruppe von Behältnisbehandlungseinrichtungen, die eine Direktdruckmaschine, eine Transporteinrichtung, eine Fülleinrichtung, eine Verschließeinrichtung und eine Verpackungseinrichtung (und/oder eine Sortiereinrichtung) umfasst.

In einer weiteren vorteilhaften Ausführungsform ist die Kontrolleinrichtung dazu geeignet und bestimmt, an die vorgegebene Dekorationsabfolge eine weitere Dekoration anzuhängen und/oder in die vorgegebene Dekorationsabfolge eine weitere Dekoration einzufügen.

In einer weiteren vorteilhaften Ausführungsform weist die Vorrichtung zum Behandeln von Behältnissen mindestens eine Druckeinrichtung bzw. eine Direktdruckmaschine auf, die die Behältnisse mit einer entsprechend der vorgegebenen Dekorationsabfolge vorgesehenen Bildelementen bzw. Motive bedruckt, und die Kontrolleinrichtung dazu geeignet und bestimmt ist, eine Änderung der vorgegebenen Dekorationsabfolge bezüglich der von der Direktdruckmaschine aufzubringenden Bildelemente bzw. Motive vorzunehmen und/oder zu veranlassen. Bevorzugt ist die Direktdruckmaschine bzw. die Druckeinrichtung dazu geeignet und bestimmt, besonders bevorzugt wie die Kontrolleinrichtung bezüglich ihrer Kontrolle der bedruckten Behältnisse, anstelle einer festen Abfolge von Dekorationen bzw. Bildelementen bzw. Motiven, aus dem Satz von Dekorationen bzw. Bildelementen bzw. Motiven bzw. aus der Dekorationsabfolge gezielt ein bestimmtes Motiv bzw. eine bestimmte Dekoration bzw. ein bestimmtes Bildelement auf ein bestimmtes (fest zugeordnetes) Behältnis zu drucken.

Bevorzugt ist eine, besonders bevorzugt zentrale, Steuerungseinrichtung vorgesehen, die geeignet und bestimmt ist, die Druckeinrichtung bzw. die Direktdruckmaschine bzw. wenigstens eine zweite (weitere) Behältnisbehandlungseinrichtung, bevorzugt alle Behältnisbehandlungseinrichtungen, welche die Behältnisse mit unterschiedlichen Dekorationen versehen, derart zu steuern, dass diese die Behältnisse mit einer von ihr vorgegebenen Dekoration versieht, etwa bestimmte Motive bzw. eine bestimmte Dekoration aus der Dekorationsabfolge bzw. der Abfolge von Motiven produziert bzw. druckt. Bevorzugt ist die Steuerungseinrichtung dazu geeignet und bestimmt, die Anzahl und die Reihenfolge von Motiven aus der Abfolge von Motiven bzw. die Anzahl und die Reihenfolge der Dekorationen aus der Dekorationsabfolge zu steuern. Kann etwa die Druckmaschine oder auch eine zweite (weitere, andere) Behältnisbehandlungseinrichtung und können bevorzugt alle Behältnisbehandlungseinrichtungen, die an der Ausstattung eines Behältnisses mit einer vorgegebenen Dekoration beteiligt sind, gesteuert werden, bestimmte Motive aus einer Abfolge von Motiven zu produzieren bzw. das Behältnis mit einer bestimmten Dekoration aus der Dekorationsabfolge auszustatten, können während der Produktion Strategien angewandt werden, die eine optimale Auslastung der Druckeinrichtung bzw. Direktdruckmaschine selbst und der nachfolgenden Verarbeitungsschritte erlauben. Nun kann beispielsweise beim Erkennen eines Druckfehlers durch das Kontrollgerät sofort der geeignete Behälter nachproduziert werden. Ohne diese Möglichkeit würde, müsste möglicherweise die unvollständige Teilserie ausgeschleust werden. Die gewünschte Serie ist durch das vorgeschlagene Vorgehen wieder vollständig. Bevorzugt werden alternativ, am Ende des Produktionsauftrags genau die fehlenden Behältnisse nachproduziert, so dass wiederum bevorzugt (nahezu) keine Überproduktion entsteht.

Kann die Anzahl und die Reihenfolge der Dekoration gesteuert werden, können auf diese Weise Behältnisse nachproduziert werden, die in Produktionsschritten nach der Druckeinrichtung bzw. Direktdruckmaschine fehlen. Aufgrund der Topologie sollten bevorzugt die Behältnisse nicht erst am Ende des gesamten Druckauftrags erstellt werden, sondern unmittelbar. Werden alle Fehler entlang der nachgelagerten Produktionsschritte systemtechnisch erfasst, können diese an der Druckeinrichtung bzw. der Direktdruckmaschine gezielt und bevorzugt unmittelbar nachproduziert werden.

In einer weiteren vorteilhaften Ausführungsform ist die Kontrolleinrichtung dazu geeignet und bestimmt, eine Änderung der vorgegebenen Dekorationsabfolge bezüglich der von der Direktdruckmaschine aufzubringenden Bildelemente ohne Übermittlung eines Bildelementes an die Direktdruckmaschine vorzunehmen und/oder zu veranlassen. Bevorzugt wird damit vorgeschlagen, dass ein System die fehlerbehafteten Behältnisse aus den verschiedenen Prozessschritten systemtechnisch erfasst und bevorzugt in einer geeigneten Weise diese Information in den Produktionsprozess der Behälterdruckmaschine bzw. der Direktdruckmaschine zum Nachproduzieren der fehlerbehafteten Behältnisse anregt. Die Nachproduktion von bestimmten Behältnissen kann am Ende der eigentlichen Produktion oder in geeigneter Weise während der Produktion erfolgen. Bevorzugt ist die (zentrale) Steuerungseinrichtung dazu geeignet und bestimmt, an wenigstens eine Behandlungseinrichtung und bevorzugt an die Behandlungseinrichtungen, die die Behältnisse mit verschiedenen Ausstattungen versehen, ein Signal zu übermitteln, welches für eine bestimmte Dekoration charakteristisch ist, ohne alle (Bild-)Informationen der Dekoration zu übermitteln.

In einer weiteren vorteilhaften Ausführungsform wird in Abhängigkeit von dem Ergebnis der von der Kontrolleinrichtung vorgenommenen Kontrolle ein Signal an die Direktdruckmaschine übermittelt und als Reaktion auf das übermittelte Signal hin die vorgegebene Abfolge von zu druckenden Bildelementen wenigstens eines Druckaggregates und bevorzugt von zwei Druckaggregaten der Direktdruckmaschine (in analoger Weise) geändert und/oder ein in der Speichereinrichtung wenigstens eines Druckaggregats und bevorzugt von (wenigstens) zwei Druckaggregaten abgelegter Satz von Bildelementen modifiziert.

In einer weiteren vorteilhaften Ausführungsform weist die Vorrichtung (zum Behandeln von Behältnissen) eine Interaktionseinrichtung mit einer Kommunikationsverbindung zwischen der Direktdruckmaschine und der Kontrolleinrichtung, insbesondere zwischen der Speichereinrichtung von wenigstens einem Druckaggregat und der Speichereinrichtung der Kontrolleinrichtung, auf. Die Interaktionseinrichtung kann dabei mit einzelnen oder mit Kombinationen von Merkmalen der bereits im Zusammenhang mit der Kontrolleinrichtung und/oder der Vorrichtung zum Bedrucken von einer Vielzahl von Behältnissen beschriebenen Interaktionseinrichtung ausgestattet sein.

In einer weiteren vorteilhaften Ausführungsform ist die Vorrichtung (zum Behandeln von Behältnissen) dazu geeignet und bestimmt, eine vorgegebene Änderung einer vorgegebenen Dekorationsabfolge von zu druckenden Bildelementen wenigstens eines Druckaggregates durch entsprechende Modifizierungen sowohl an der Direktdruckmaschine als auch an der Kontrolleinrichtung, insbesondere in analoger Weise, vorzunehmen. Bevorzugt werden (simultan) Änderungen der vorgegebenen Dekorationsabfolge bei allen Behältnisbehandlungseinrichtungen (in entsprechender bzw. analoger Weise) vorgenommen, die die Behältnisse mit verschiedener Dekoration versehen.

In einer weiteren vorteilhaften Ausführungsform weist die Vorrichtung (zum Behandeln von Behältnissen) und insbesondere die Kontrolleinrichtung eine Speichereinrichtung auf, in der wenigstens die vorgegebene Dekorationsabfolge der von der ersten Behältnisbehandlungseinrichtung an die zu behandelnden Behältnisse anzubringende Dekoration abgelegt ist. Bevorzugt weisen alle Behandlungseinrichtungen, die die Behältnisse mit verschiedenen Dekorationen versehen, wenigstens eine (eigene) Speichereinrichtung auf, in der die Dekorationsabfolge und/oder die die verschiedenen Dekorationen betreffenden Informationen (etwa Bildelemente) abgelegt sind.

Bevorzugt weist die Vorrichtung zur Behandlung von Behältnissen wenigstens eine Puffereinrichtung, etwa einen Einlaufpuffer, auf, der durch die Steuerungseinrichtung derart steuerbar ist, dass, besonders bevorzugt bis zum Eintreffen von wenigstens einem (eindeutig) vorgegebenen (nachproduzierten) Behältnis, wenigstens ein Behältnis nicht weitertransportiert wird bzw. zurückgehalten wird. Bevorzugt handelt es sich bei dem nicht weitertransportierten bzw. zurückgehaltenen Behältnis um wenigstens ein mit einer weiteren Dekoration versehenes Behältnis, dessen Dekoration sich von der Dekoration des nachproduzierten bzw. erneut behandelten Behältnisses unterscheidet. Bevorzugt kann damit erreicht werden, dass trotz ausgeschleuster fehlerhafter Behältnisse einer Dekorationsabfolge immer wenigstens durch die Puffereinrichtung wenigstens eine, bevorzugt wenigstens zwei oder drei Zusammenstellung(en) von Behältnissen einer vollständigen Dekorationsabfolge erstellt bzw. bereit gestellt werden können, so dass vorteilhaft der Produktionsablauf ungestört weiterlaufen kann. Bevorzugt wird ein als fehlerhaft detektiertes bzw. durch die Kontrolleinrichtung als fehlerhaft gewertetes Behältnis durch das nächstfolgende nicht fehlerhaft gewertete, mit derselben Dekoration ausgestattete Behältnis ersetzt wird. Bei der Puffereinrichtung kann es sich dabei um eine Puffereinrichtung handeln, die in Transportrichtung (unmittelbar) stromaufwärts von der Fülleinrichtung und/oder der Verpackungseinrichtung angeordnet ist.

Die vorliegende Erfindung ist weiterhin gerichtet auf ein Verfahren zum Behandeln von Behältnissen mit wenigstens einer ersten Behältnisbehandlungseinrichtung, die dazu geeignet und bestimmt ist, die zu behandelnden Behältnisse mit einer unterschiedlichen Dekoration zu versehen, und die zu behandelnden Behältnisse jeweils mit einer entsprechend einer vorgegebenen Dekorationsabfolge vorgesehenen Dekoration versieht, mit einer Transporteinrichtung, welche die von der ersten Behältnisbehandlungseinrichtung behandelten Behältnisse entlang eines vorgegebenen Transportpfads, bevorzugt vereinzelt und nacheinander, wenigstens einer Kontrolleinrichtung zum Kontrollieren der behandelten Behältnisse zuführt und/oder abführt.

Erfindungsgemäß kontrolliert die Kontrolleinrichtung die Behältnisse wenigstens auf die durch die erste Behältnisbehandlungseinrichtung angebrachte Dekoration hin und nimmt in Abhängigkeit von ihrem Kontrollergebnis eine Änderung der vorgegebenen Dekorationsabfolge wenigstens der ersten und/oder einer zweiten Behältnisbehandlungseinrichtung, bevorzugt einer Direktdruckmaschine, vor und/oder veranlasst eine solche Änderung. Dabei ist die obig beschriebene Vorrichtung zum Behandeln von Behältnissen insbesondere dazu eingerichtet und dafür vorgesehen, dieses Verfahren durchzuführen, d.h. dass alle für die obig beschriebene Vorrichtung ausgeführten Merkmale ebenso für das hier beschriebene Verfahren offenbart sind und umgekehrt.

In einer vorteilhaften Ausführungsform veranlasst die Kontrolleinrichtung in Abhängigkeit von dem Kontrollergebnis eine Nach- und/oder Zwischenproduktion wenigstens eines Behältnisses, bevorzugt mit der Dekoration des kontrollierten Behältnisses.

Wie obig beschrieben, ist das vorgeschlagene Verfahren besonders vorteilhaft für kleine Chargen, also bevorzugt für Verfahren zum Behandeln von Behältnissen, in denen weniger als 5000 Behältnisse, bevorzugt weniger als 1000, bevorzugt weniger als 500, bevorzugt weniger als 100, bevorzugt weniger als 50 und besonders bevorzugt weniger als 11 Behältnisse mit derselben bzw. identischer Dekoration (bevorzugt durch die Direktdruckeinrichtung mit einem identischen Motiv und/oder mit demselben Produkt befüllt und/oder mit demselben Verschluss) versehen werden.

Weitere Vorteile und Ausführungsformen ergeben sich aus den beigefügten Zeichnungen: Darin zeigen:
- Fig. 1: ein Ablaufdiagramm eines RIP-Prozesses im PS/PDF-Workflow;
- Fig. 2: eine Darstellung eines zu bedruckenden Behältnisses;
- Fig. 3: eine Darstellung einer Ausführungsform einer erfindungsgemäßen Vorrichtung;
- Fig. 4: eine schematische Darstellung einer erfindungsgemäßen Vorrichtung in einer weiteren Ausführungsform;
- Fig. 5: eine schematische Darstellung einer Direktdruckmaschine;
- Fig. 6: eine schematische Darstellung einer Interaktionseinrichtung;
- Fig. 7: eine schematische Darstellung einer Sortiereinrichtung;
- Fig. 8: eine schematische Darstellung einer erfindungsgemäßen Vorrichtung in einer weiteren Ausführungsform;
- Fig. 9: eine schematische Darstellung einer erfindungsgemäßen Vorrichtung in einer weiteren Ausführungsform;
- Fig. 10: eine schematische Darstellung einer Kontrolleinrichtung; und
- Fig. 11: eine schematische Darstellung einer Vorrichtung zum Behandeln von Behältnissen.

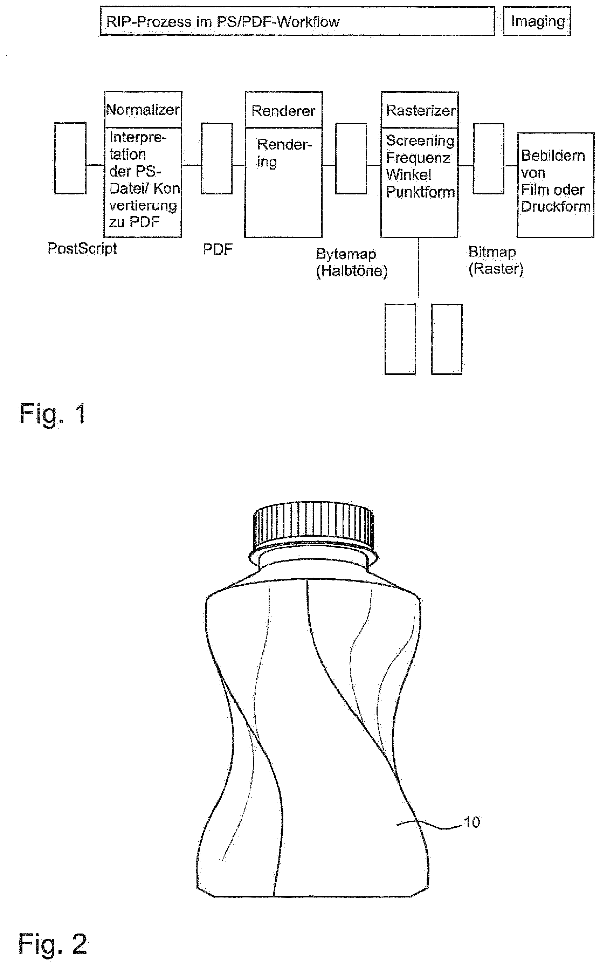

Fig. 1 zeigt ein Ablaufdiagramm eines RIP-Prozesses im PS/PDF-Workflow. Ein anfänglich vorliegendes PostScript-Dokument wird mittels eines sogenannten Normalizers durch Interpretation der PS-Datei bzw. einer Konvertierung zu PDF in ein PDF-Dokument umgewandelt. Anschließend wird dieses mittels eines Rendering-Prozesses in Bytemap (Halbtöne) umgewandelt und dieses wiederum über einen sogenannten Rasterizer über Screening-Verfahren in ein Bitmap (Raster) umgewandelt. Ein hieraus resultierendes Raster-Dokuments kann von einem Druckkopf eines Druckaggregates, der sogenannte RIP-Dateien benötigt, die im Wesentlichen bestimmt, in welcher Sequenz und mit welcher Tropfengröße jede einzelne Druckdüse in jeder der möglichen Druckfarben angesteuert wird, für einen Druckvorgang verwendet werden.

Fig. 2 zeigt eine beispielhafte Darstellung eines zu bedruckenden Behältnisses 10, für die das erfindungsgemäße Verfahren bzw. die erfindungsgemäße Vorrichtung besonders vorteilhaft ist. Gezeigt ist ein schraubenförmig gedrehtes Behältnis 10, ein sogenannte "twisted shaped"-Behältnis. Derartige Behältnisse können nur mit einem sogenannten "Sleeve" etikettiert werden, ein Kunststoffschlauch, der auf das Behältnis 10 thermisch aufgeschrumpft wird. Für solche Behältnisse ist ein Direktdruck daher besonders vorteilhaft.

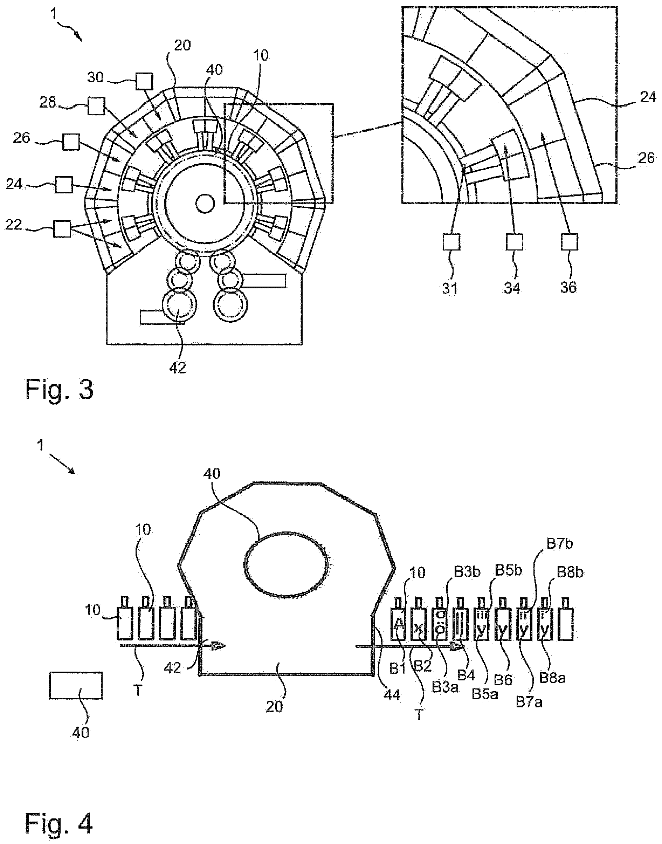

Fig. 3 zeigt eine Darstellung einer Ausführungsform einer erfindungsgemäßen Vorrichtung 1 mit einer Druckeinrichtung 20 bzw. Direktdruckmaschine 20 zum Bedrucken von aufeinander folgenden, von einer Transporteinrichtung 40, etwa über eine Zuführeinrichtung 42, zugeführten und abgeführten Behältnissen 10. Die Druckeinrichtung 20 bzw. Direktdruckmaschine 20 weist dabei verschiedene Druckaggregate 22, 24, 26, 28 und 30 auf, welche etwa Tinte unterschiedlicher Farbe auf das zu bedruckende Behältnis 10 aufbringen. So bringt das Druckaggregat 22 weiße Farbe auf, das Druckaggregat 24 gelbe Farbe, das Druckaggregat 26 magenta-farbige Tinte, das Druckaggregat 28 cyan-farbige Tinte und das Druckaggregat 30 schwarz-farbige Tinte auf das jeweilig zu behandelnde Behältnis 10 auf. Ein (bzw. jedes) Druckaggregat 24, 26 weist dabei bevorzugt einen Druckkopf 32, eine Druckkopfsteuerungseinrichtung 34 (Druckansteuerung) sowie einen Tintentank 36 auf.

Fig. 4 zeigt eine schematische Darstellung einer erfindungsgemäßen Vorrichtung 1 in einer weiteren Ausführungsform. Dargestellt ist eine Druckeinrichtung 20 bzw. Direktdruckmaschine 20 mit einem Flaschenstrom und variablem Druck. Dabei werden wiederum eine Vielzahl von (bevorzugt gleichartigen) Behältnissen 10 von einer Transporteinrichtung 40 in Transportrichtung T transportiert bzw. gefördert und insbesondere einer Zuführeinrichtung 42 der Druckeinrichtung 20 bzw. Direktdruckmaschine 20 zugeführt. Auch innerhalb der Druckeinrichtung 20 bzw. Direktdruckmaschine 20 werden die Behältnisse 10 von der Transporteinrichtung 40 bevorzugt von einem Druckaggregat zu einem anderen Druckaggregat transportiert. Die Druckeinrichtung 20 bzw. die Direktdruckmaschine 20 bedruckt dabei aufeinanderfolgende Behältnisse in einer unterschiedlichen Weise. Während das zuletzt bedruckte Behältnis 10 mit lediglich genau einem Bildelement B1, dem Buchstaben "A", bedruckt worden ist, ist das vorhergehende Behältnis mit dem Bildelement B2 "x", das weiter vorhergehende Behältnis 10 mit den beiden Bildelementen B3a und B3b, nämlich "o" und "ö", das weiter vorhergehende Behältnis 10 mit dem Bildelement B3, bestehend aus zwei langen senkrechten Strichen, bedruckt. Die vier weiter vorhergehenden Behältnisse 10 weisen alle ein gemeinsames Bildelement (Bezugszeichen B5a, B6, B7a, B8a) mit dem Buchstaben "y" auf, welches jeweils (bevorzugt) an einem unteren Bereich des Behältnisses angeordnet ist. Des Weiteren weisen drei dieser genannten Behältnisse noch ein variables Bildelement (Bezugszeichen B5b, B7b, B8b) auf, welches jeweils, bevorzugt wieder an derselben bzw. entsprechender Stelle, hier nämlich einem oberen Bereich des Behältnisses angeordnet ist. Dieses variable Bildelement kann beispielsweise landesspezifische Inhalte bzw. sortenabhängige Hinweise bzw. Inhalte aufweisen.

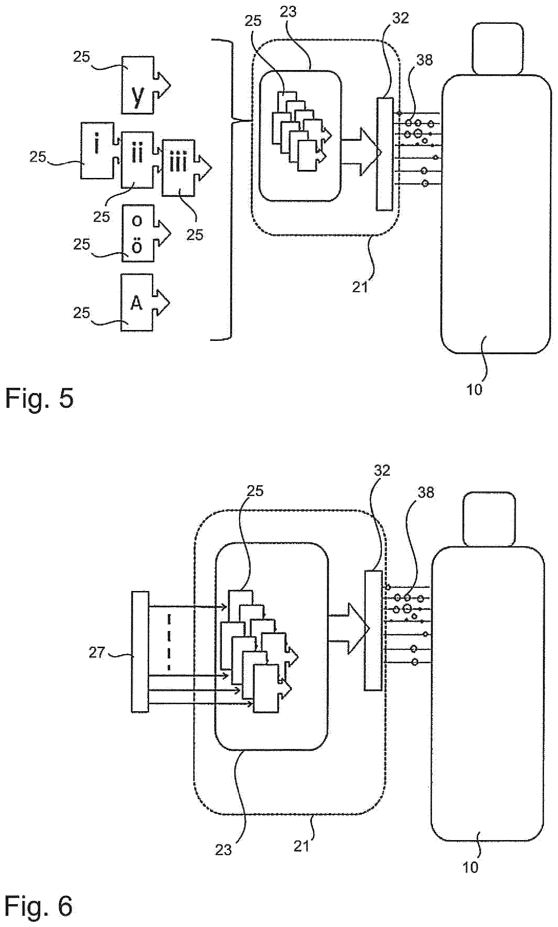

Fig. 5 zeigt eine schematische Darstellung einer Druckeinrichtung bzw. einer Direktdruckmaschine mit mehreren RIP-Dateien 25. Aus dem gezeigten Satz von RIP-Dateien 25 (Bildelemente) können durch Kombination bzw. Zusammensetzung dieser mehrere verschiedene Bildelemente (wie etwa B3a und B3b) erzeugt werden bzw. es können auch mehrere Bildelemente auf einem Behältnis aufgedruckt werden. Dabei ist der Satz von (zu druckenden) Bildelementen, die bevorzugt als RIP-Datei 25 vorliegen, in der Speichereinrichtung 23 eines Druckaggregats 21 und/oder einer Druckeinrichtung 20 bzw. einer Direktdruckmaschine 20 abgelegt. Bezugszeichen 32 kennzeichnet einen Druckkopf des Druckaggregats 21, der gerade in Arbeit ist, und Tintentropfen 38, deren Größe bevorzugt ebenfalls von dem Druckaggregat 21 variiert werden kann, auf das zu bedruckende Behältnis 10 aufbringt.

Fig. 6 zeigt eine schematische Darstellung einer Interaktionseinrichtung 27, welche eine Schnittstelle sein kann, zur Auswahl einer RIP-Datei 25. Über diese Interaktionseinrichtung 27 kann die vorgegebene Abfolge von zu druckenden Druckbildern bzw. Bildelementen (B1-B8) ausgewählt werden bzw. diese modifiziert werden. Über diese Interaktionseinrichtung 27 kann auch durch Hinzufügen oder Entfernen eines oder mehrerer Bildelemente (B1-B8) der Satz von Bildelementen modifiziert werden.

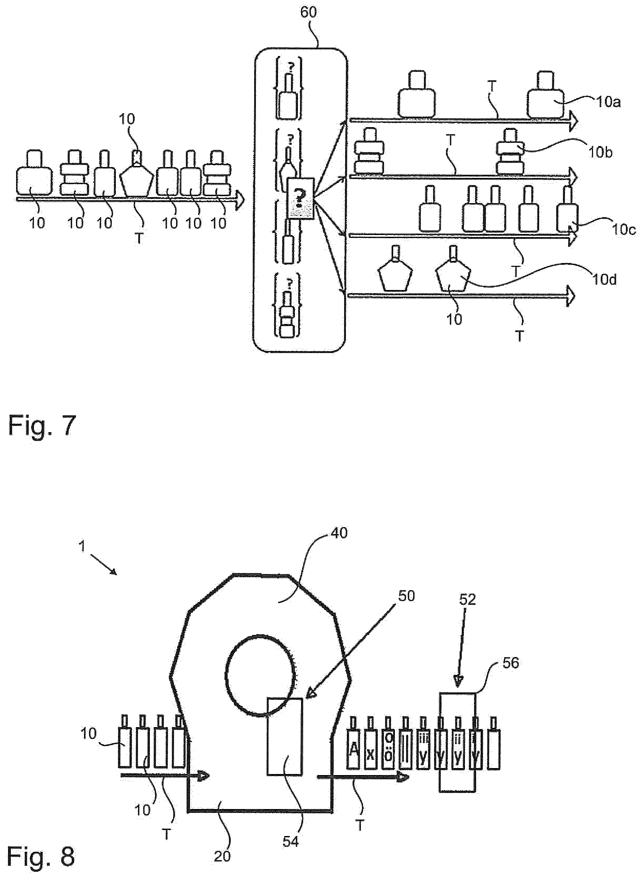

Fig. 7 zeigt eine schematische Darstellung einer Sortiereinrichtung 60, eines Sekamats mit Sortierfunktion. Dabei werden von der Transporteinrichtung 40 zunächst noch Behältnisse 10 unterschiedlichen Typs (10a, 10b, 10c, 10d) transportiert. Bevorzugt weist die Vorrichtung 1 eine Sortiereinrichtung 60 auf, die in Transportrichtung T gesehen, besonders bevorzugt der Druckeinrichtung 20 bzw. Direktdruckmaschine 20 nachgeordnet ist, und die die Behältnisse 10 entsprechend ihres Typs (10a, 10b, 10c, 10d) in unterschiedliche Transportlinien einteilt bzw. sortiert. Bevorzugt kann eine Druckeinrichtung bzw. Direktdruckmaschine Behältnisse unterschiedlichen Typs bedrucken. Die Sortiereinrichtung 60 kann daher eine Sortierung der Behältnisse beispielsweise in Abhängigkeit eines verschieden aufgebrachten Bildelementes (B1 - B8) bzw. Aufdrucks vornehmen.

Fig. 8 zeigt eine schematische Darstellung der in Figur 4 dargestellten, erfindungsgemäßen Vorrichtung 1 in einer weiteren Ausführungsform. Diese weist im Unterschied zu der in Fig. 4 gezeigten Ausführungsform zusätzlich zwei Kontrolleinrichtungen 50, 52 auf. Diese unterscheiden sich dabei bevorzugt in ihrer Anordnung im Verhältnis zur Druckeinrichtung 20 bzw. Direktdruckmaschine. Bevorzugt kann eine Kontrolleinrichtung 50 in der Druckeinrichtung 20 bzw. Direktdruckmaschine 20 angeordnet sein, wobei bevorzugt die Kontrolle des Drucks in der Druckeinrichtung 20 bzw. Direktdruckmaschine 20 erfolgt, und/oder eine Kontrolleinrichtung 52 kann nach der Druckeinrichtung 20 bzw. Direktdruckmaschine 20, bevorzugt am Transportband bzw. an der Transporteinrichtung, wobei eine Kontrolle des Drucks dann bevorzugt nach der Druckeinrichtung bzw. Direktdruckmaschine 20 "am Band" erfolgt, und/oder in einer eigenen, fest installierten Inspektionsmaschine angeordnet sein.

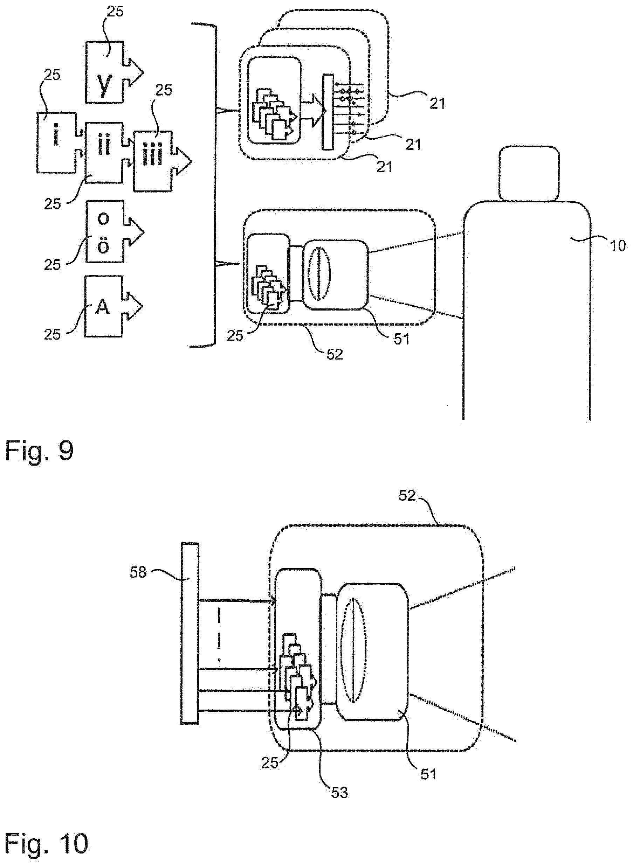

Fig. 9 zeigt eine schematische Darstellung einer erfindungsgemäßen Vorrichtung 1 in einer weiteren Ausführungsform. Dargestellt ist zunächst eine bereits in Fig. 5 schematisch gezeigte Vorrichtung 1, hier allerdings mit drei Druckaggregaten 21 und einer zusätzlichen Kontrolleinrichtung 52. Die Kontrolleinrichtung 52 weist bevorzugt eine Inspektionseinrichtung 51 auf, die wenigstens einen Oberflächenbereich eines Behältnisses 10 optisch bzw. visuell inspiziert. Die Inspektionseinrichtung 51 kann beispielsweise als eine Kamera oder ein CCD-Chip etc. ausgebildet sein. Zudem weist die Kontrolleinrichtung 52 bevorzugt eine Speichereinrichtung 53 auf, in die Bildelemente (B1 - B8), bevorzugt als RIP-Dateien 25 abgelegt bzw. hinterlegt werden können. Bevorzugt werden dieselben Bildelemente (B1 - B8) bzw. dieselben RIP-Dateien sowohl an mindestens eine und bevorzugt alle (Speichereinrichtungen 23) der Druckaggregate 21 als auch an die Speichereinrichtung 53 der Kontrolleinrichtung 52 übergeben bzw. übermittelt. Es ist aber auch möglich, dass nicht tatsächlich dieselben Dateien übermittelt werden, sondern dass lediglich ein ursprünglicher Satz von Bildelementen jeweils als Ausgangs-Satz von Bildelementen dient und aus diesen abgeleitete Bildelementdateien an die Speichereinrichtungen 23 der Druckaggregate 21 sowie die Speichereinrichtung 53 der Kontrolleinrichtung 52 übermittelt werden. Hierbei kann dann eine jeweilige Druckfarbe der Druckaggregate beispielsweise berücksichtigt werden.

Fig. 10 zeigt eine schematische Darstellung einer Ausführungsform einer (erfindungsgemä-ßen) Kontrolleinrichtung 52. Die in der Figurenbeschreibung zur Figur 9 bereits verwendeten Bezugszeichen kennzeichnen dabei dieselben Elemente. Die Kontrolleinrichtung 52 weist eine Interaktionseinrichtung 58 auf, welche mit einer Interaktionseinrichtung 27 der Druckeinrichtung 20 bzw. Direktdruckmaschine 20 bzw. der Druckaggregate 21 übereinstimmen oder bevorzugt über eine Kommunikationseinrichtung mit diesen verbunden sein kann. Die Interaktionseinrichtung 58 dient dabei als Schnittstelle, bevorzugt zur Auswahl des/der Master-Prints bzw. eines (zu kontrollierenden) Bildelementes bzw. zu kontrollierenden Bildelemente (B1 - B8).

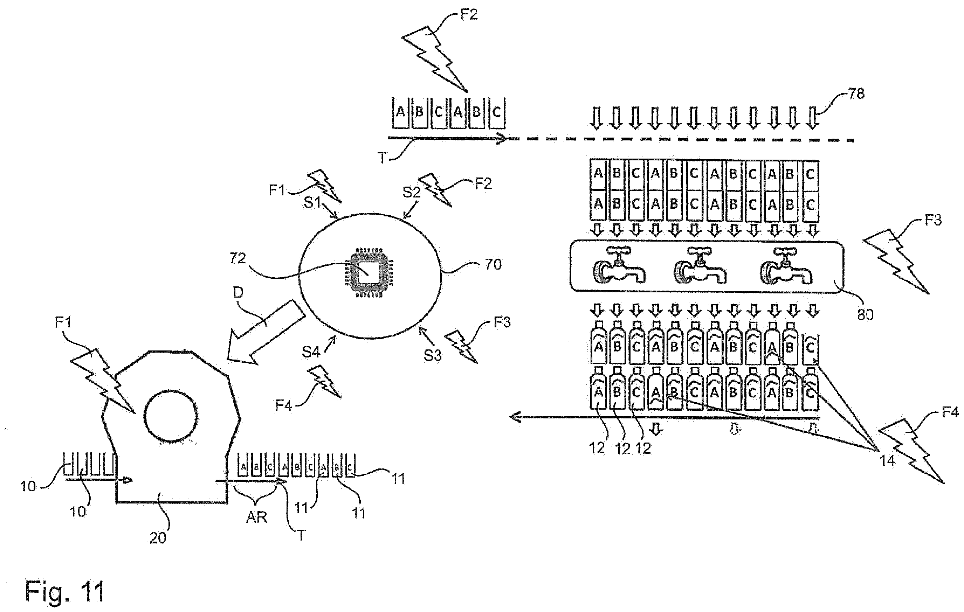

Fig. 11 zeigt eine schematische Darstellung einer Ausführungsform einer erfindungsgemäßen Vorrichtung 100 zum Behandeln von Behältnissen 10. Dargestellt sind eine Druckeinrichtung bzw. eine Direktdruckmaschine 20, eine Transporteinrichtung, die die Behältnisse 10 in Transportrichtung T transportiert, etwa zwischen dem Druckprozess in der Direktdruckmaschine 20 und dem Füllprozess in der Fülleinrichtung 80, eine Pufferstrecke 78 vor einer Fülleinrichtung 80 inklusive Verschließer, hier als Linearfüller dargestellt. Des Weiteren ist eine Pufferstrecke und ein Weitertransport zum beispielhaften Verpacken dargestellt. In den einzelnen Schritten können Produktionsfehler F1 - F4 entstehen. Beispielsweise kann beim Füllen durch das Befüllen mit falschem Füllpegel ein Fehler F4, beim Verschließen ein Fehler, beim Transportieren ein Fehler F2 oder zu Beginn beim Bedrucken ein Fehler F1 entstehen. Ein System 70 bzw. eine (zentrale) Steuerungseinrichtung 70 erfasst die Fehlerereignisse F1 - F4 und informiert die Druckeinrichtung 20 bzw. die Direktdruckmaschine 20 über die Fehlteile bzw. die Art und Anzahl der fehlerhaft produzierten bzw. behandelten bzw. mit fehlerhafter Ausstattung versehenen Behältnisse 10. Bevorzugt ordert das System bzw. die Steuerungseinrichtung 70, welche einen Prozessor 72 aufweisen kann, bei der Druckeinrichtung 20 bzw. bei der Direktdruckmaschine 20 bevorzugt sofort die Fehlteile an, um die Abfolge wieder auffüllen zu können. Bevorzugt fordert das System bzw. die Steuerungseinrichtung 70 bevorzugt die Fehlteile in einer bestimmten Reihenfolge an, die für den Fehlerort das unmittelbare Wiederherstellen des ordentlichen bzw. fehlerfreien Zustands ermöglicht. Bevorzugt wird eine normale Abfolge unterbrochen und der fehlende Behälter innerhalb einer (Ausstattungs-)Abfolge produziert.

Im dargestellten Ausstattungsbeispiel mit der fehlerfreien Ausstattungsabfolge R "ABC" aus den verschiedenen Ausstattungen "A", "B" und "C" (welche etwa Bildelemente symbolisieren können, mit denen die Behältnisse bedruckt werden und somit als bedruckte Behältnisse 11 diese Ausstattung aufweisen), könnte etwa eine (Nach-)Produktion dann wie folgt aussehen: "ABC ABAC AABCC.." (in einem zweiten Schritt wird also zwischen der Ausstattung B und C eine A-Ausstattung dazwischen produziert, in einem dritten Schritt wird die Ausstattung A zweimal und die Ausstattung C ebenfalls zweimal direkt nacheinander produziert).

In der in der Fig. 11 gezeigten Vorrichtung 100 könnte der Einlaufpuffer so gesteuert werden, dass er bis zum Eintreffen der Fehlteile die normale Abfolge in den Puffern so verteilt, dass drei von den 4x3 Füllpositionen immer gefüllt sind. Treffen die Fehlteile ein, wird die vierte Dreiergruppe mit den Fehlteilen vervollständigt. Die Pufferstrecke am Füllerauslauf wird derart gesteuert, dass in der Ausgabereihe der fehlerhaft unterfüllte Behälter "A" ausgeschleust und aus der nachfolgenden Reihe der Behälter "A" nachgefördert wird. Die vier Dreiergruppen können vervollständigt auf das Transportband zum Verpacker abgegeben werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 10, 10a, 10b, 10c, 10d: Behältnis
- 11: bedrucktes Behältnis
- 12: befülltes Behältnis
- 20: Direktdruckmaschine, Druckeinrichtung
- 21, 22, 24, 26, 28, 30: Druckaggregat
- 23: Speichereinrichtung
- 25: RIP-Datei
- 27: Interaktionseinrichtung
- 32: Druckkopf
- 34: Druckkopfsteuerungseinrichtung
- 36: Tintentank
- 38: Tintentropfen
- 40: Transporteinrichtung
- 42: Zuführeinrichtung
- 50, 52: Kontrolleinrichtung
- 51: Inspektionseinrichtung
- 53: Speichereinrichtung
- 54, 56: Kontrollbereich
- 58: Interaktionseinrichtung
- 60: Sortiereinrichtung
- 70: Steuerungseinrichtung
- 72: Prozessor
- 80: Fülleinrichtung
- 100: Vorrichtung zum Behandeln von Behältnissen
- D: Pfeil
- F1 - F4: Fehler
- R: Dekorationsabfolge
- T: Transportrichtung
- B1, B2, B3a, B3b, B4: Bildelement
- B5a, B5b, B6, B7a, B7b: Bildelement
- B8a, B8b: Bildelement

## Patentansprüche

1. Vorrichtung (1) zum Behandeln von Behältnissen (10) mit wenigstens einer ersten Behältnisbehandlungseinrichtung, die dazu geeignet und bestimmt ist, die zu behandelnden Behältnisse (10) mit einer unterschiedlichen Dekoration zu versehen, und die zu behandelnden Behältnisse (10) jeweils mit einer entsprechend einer vorgegebenen Dekorationsabfolge (R) vorgesehenen Dekoration versieht, mit einer Transporteinrichtung (40), welche die von der ersten Behältnisbehandlungseinrichtung behandelten Behältnisse (10) entlang eines vorgegebenen Transportpfads, bevorzugt vereinzelt und nacheinander, wenigstens einer Kontrolleinrichtung (50, 52) zum Kontrollieren der behandelten Behältnisse (10) zuführt und/oder abführt,
**dadurch gekennzeichnet, dass**
die Kontrolleinrichtung (50, 52) dazu geeignet und bestimmt ist, die Behältnisse (10) wenigstens auf die durch die erste Behältnisbehandlungseinrichtung angebrachte Dekoration hin zu kontrollieren und in Abhängigkeit von ihrem Kontrollergebnis eine Änderung der vorgegebenen Dekorationsabfolge (R) wenigstens der ersten und/oder einer zweiten Behältnisbehandlungseinrichtung, bevorzugt einer Druckeinrichtung (20) und/oder Direktdruckmaschine (20), wobei mittels der Direktdruckmaschine ein Farbauftrag direkt auf der Behältnisoberfläche erfolgt, vorzunehmen und/oder zu veranlassen.

2. Vorrichtung (1) nach Anspruch 1,
**dadurch gekennzeichnet, dass**
die Kontrolleinrichtung (50, 52) dazu geeignet und bestimmt ist, in Abhängigkeit von dem Kontrollergebnis eine Nach- und/oder Zwischenproduktion wenigstens eines Behältnisses (10), bevorzugt mit der Dekoration des kontrollierten Behältnisses (10), zu veranlassen.

3. Vorrichtung (1) nach wenigstens einem der vorangegangenen Ansprüche,
**dadurch gekennzeichnet, dass**
über eine Änderung der Dekorationsabfolge (R) eine Änderung der Anzahl und Reihenfolge von der jeweils an die Behältnisse (10) von wenigstens einer ersten Behältnisbehandlungseinrichtung anzubringenden Dekoration bewirkt wird.

4. Vorrichtung (1) nach wenigstens einem der vorangegangenen Ansprüche,
**dadurch gekennzeichnet, dass**
die wenigstens eine erste Behältnisbehandlungseinrichtung und/oder die wenigstens zweite Behältnisbehandlungseinrichtung ausgewählt ist aus einer Gruppe von Behältnisbehandlungseinrichtungen, die eine Direktdruckmaschine (20), eine Fülleinrichtung, eine Verschließeinrichtung und eine Verpackungseinrichtung umfasst.

5. Vorrichtung (1) nach wenigstens einem der vorangegangenen Ansprüche,
**dadurch gekennzeichnet, dass**
die Kontrolleinrichtung (50, 52) dazu geeignet und bestimmt ist, an die vorgegebene Dekorationsabfolge (R) eine weitere Dekoration anzuhängen und/oder in die vorgegebene Dekorationsabfolge (R) eine weitere Dekoration einzufügen.

6. Vorrichtung (1) nach wenigstens einem der vorangegangenen Ansprüche,
**dadurch gekennzeichnet, dass**
die Vorrichtung (1) mindestens eine Direktdruckmaschine (20), wobei mittels der Direktdruckmaschine ein Farbauftrag direkt auf der Behältnisoberfläche erfolgt, aufweist, die die Behältnisse (10) mit einer entsprechend der vorgegebenen Dekorationsabfolge (R) vorgesehenen Bildelementen (B1 - B8) bedruckt, und die Kontrolleinrichtung (50, 52) dazu geeignet und bestimmt ist, eine Änderung der vorgegebenen Dekorationsabfolge (R) bezüglich der von der Direktdruckmaschine (20) aufzubringenden Bildelemente (B1 - B8) vorzunehmen und/oder zu veranlassen.

7. Vorrichtung (1) nach dem vorangegangenen Anspruch 6,
**dadurch gekennzeichnet, dass**
die Kontrolleinrichtung (50, 52) dazu geeignet und bestimmt ist, eine Änderung der vorgegebenen Dekorationsabfolge (R) bezüglich der von der Direktdruckmaschine (20) aufzubringenden Bildelemente (B1 - B8) ohne Übermittlung eines Bildelementes (B1 - B8) an die Direktdruckmaschine (20) vorzunehmen und/oder zu veranlassen.

8. Vorrichtung (1) nach wenigstens einem der vorangegangenen Ansprüche 6 und 7,
**dadurch gekennzeichnet, dass**
in Abhängigkeit von dem Ergebnis der von der Kontrolleinrichtung (50, 52) vorgenommenen Kontrolle ein Signal an die Direktdruckmaschine (20) übermittelt wird und als Reaktion auf das übermittelte Signal hin die vorgegebene Abfolge von zu druckenden Bildelementen (B1 - B8) wenigstens eines Druckaggregates (22, 24) und bevorzugt von zwei Druckaggregaten (22, 24) der Direktdruckmaschine (20) geändert wird und/oder ein in einer Speichereinrichtung (23) wenigstens eines Druckaggregats (22, 24) und bevorzugt von zwei Druckaggregaten (22, 24) abgelegter Satz von Bildelementen (B1 - B8) modifiziert wird.

9. Vorrichtung (1) nach wenigstens einem der vorangegangenen Ansprüche 6 bis 8,
**dadurch gekennzeichnet, dass**
die Vorrichtung (1) eine Interaktionseinrichtung (27) mit einer Kommunikationsverbindung zwischen der Direktdruckmaschine (20) und der Kontrolleinrichtung (50, 52), insbesondere zwischen einer Speichereinrichtung (23) von wenigstens einem Druckaggregat (22, 24) und einer Speichereinrichtung (53) der Kontrolleinrichtung (50, 52), aufweist.

10. Vorrichtung (1) nach wenigstens einem der vorangegangenen Ansprüche,
**dadurch gekennzeichnet, dass**
die erste und/oder die zweite Behältnisbehandlungseinrichtung eine Direktdruckmaschine ist, welche die Behältnisse mit zu druckenden Bildelementen versieht, wobei mittels der Direktdruckmaschine ein Farbauftrag direkt auf der Behältnisoberfläche erfolgt, und wobei die Vorrichtung (1) dazu geeignet und bestimmt ist, eine vorgegebene Änderung einer vorgegebenen Dekorationsabfolge von zu druckenden Bildelementen (B1 - B8) wenigstens eines Druckaggregates (22, 24) der Direktdruckmaschine durch entsprechende Modifizierungen sowohl an der Direktdruckmaschine (20) als auch an der Kontrolleinrichtung (50, 52) vorzunehmen.

11. Vorrichtung (1) nach dem vorangegangenen Anspruch,
**dadurch gekennzeichnet, dass**
die Vorrichtung (1) und insbesondere die Kontrolleinrichtung (50, 52) eine Speichereinrichtung (53) aufweist, in der wenigstens die vorgegebene Dekorationsabfolge (R) der von der ersten Behältnisbehandlungseinrichtung an die zu behandelnden Behältnisse (10) anzubringende Dekoration abgelegt ist.

12. Verfahren zum Behandeln von Behältnissen (10) mit wenigstens einer ersten Behältnisbehandlungseinrichtung, die dazu geeignet und bestimmt ist, die zu behandelnden Behältnisse (10) mit einer unterschiedlichen Dekoration zu versehen, und die zu behandelnden Behältnisse (10) jeweils mit einer entsprechend einer vorgegebenen Dekorationsabfolge (R) vorgesehenen Dekoration versieht, mit einer Transporteinrichtung (40), welche die von der ersten Behältnisbehandlungseinrichtung behandelten Behältnisse (10) entlang eines vorgegebenen Transportpfads, bevorzugt vereinzelt und nacheinander, wenigstens einer Kontrolleinrichtung (50, 52) zum Kontrollieren der behandelten Behältnisse (10) zuführt und/oder abführt,
**dadurch gekennzeichnet, dass**
die Kontrolleinrichtung (50, 52) die Behältnisse (10) wenigstens auf die durch die erste Behältnisbehandlungseinrichtung angebrachte Dekoration hin kontrolliert und in Abhängigkeit von ihrem Kontrollergebnis eine Änderung der vorgegebenen Dekorationsabfolge (R) wenigstens der ersten und/oder einer zweiten Behältnisbehandlungseinrichtung, bevorzugt einer Direktdruckmaschine (20), wobei mittels der Direktdruckmaschine (20) ein Farbauftrag direkt auf der Behältnisoberfläche erfolgt, vornimmt und/oder veranlasst.

13. Verfahren nach dem vorhergehenden Anspruch,
**dadurch gekennzeichnet, dass**
die Kontrolleinrichtung (50, 52) in Abhängigkeit von dem Kontrollergebnis eine Nach- und/oder Zwischenproduktion wenigstens eines Behältnisses (10), bevorzugt mit der Dekoration des kontrollierten Behältnisses (10), veranlasst.

## Claims

1. Apparatus (1) for treating containers (10) with at least a first container treatment device which is suitable and intended for providing a different decoration on the containers (10) to be treated, and provides the containers (10) to be treated with a decoration provided according to a predefined decoration sequence (R), having a transport device (40), which supplies and/or discharges the containers (10) treated by the first container treatment device along a predefined transport path, preferably individually and successively, to at least one monitoring device (50, 52) for monitoring the treated containers (10),
**characterised in that**
the monitoring device (50, 52) is suitable and intended for monitoring the containers (10) at least with respect to the decoration applied by the first container treatment device, and depending on the monitoring result to carry out and/or initiate a change in the predefined decoration sequence (R) of at least the first and/or a second container treatment device, preferably of a printing device (20) and/or a direct printing machine (20).

2. Apparatus (1) according to claim 1,
**characterised in that**
the monitoring device (50, 52) is suitable and intended for carrying out, depending on the monitoring result, an after-production and/or intermediate production of at least one container (10), preferably with the decoration of the monitored container (10).

3. Apparatus (1) according to at least one of the preceding claims,
**characterised in that**
via a change in the decoration sequence (R), a change is achieved in the number and order of the decorations to be applied to the containers (10) by at least one first container treatment device.

4. Apparatus (1) according to at least one of the preceding claims,
**characterised in that**
the at least one first container treatment device and/or the at least second container treatment device is selected from a group of container treatment devices which comprises a direct printing machine (20), a filling device, a closing device and a packing device.

5. Apparatus (1) according to at least one of the preceding claims,
**characterised in that**
the monitoring device (50, 52) is suitable and intended for appending a further decoration to the predefined decoration sequence (R) and/or for inserting a further decoration into the predefined decoration sequence (R).

6. Apparatus (1) according to at least one of the preceding claims,
**characterised in that**
the apparatus (1) comprises at least one direct printing machine (20), wherein by the direct printing machine a colour contribution is carried out directly on the container surface, which prints the containers (10) with an image element (B1 - B8) provided according to a predefined decoration sequence (R), and the monitoring device (50, 52) is suitable and intended for carrying out and/or initiating a change in the predefined decoration sequence (R) with respect to the image elements (B1 - B8) to be applied by the direct printing machine (20).

7. Apparatus (1) according to claim 6,
**characterised in that**
the monitoring device (50, 52) is suitable and intended for carrying out and/or initiating a change in the predefined decoration sequence (R) with respect to the image elements (B1 - B8) to be applied by the direct printing machine (20) without transmission of an image element (B1 - B8) to the direct printing machine (20).

8. Apparatus (1) according to at least one of the preceding claims 6 and 7, **characterised in that**
depending on the result of the monitoring performed by the monitoring device (50, 52), a signal is transmitted to the direct printing machine (20) and in response to the transmitted signal, the predefined sequence of image elements (B1 - B8) to be printed by at least one printing assembly (22, 24) and preferably by two printing assemblies (22, 24) of the direct printing machine (20) is changed, and/or a set of image elements (B1 - B8) stored in the memory device (23) of at least one printing assembly (22, 24) and preferably of two printing assemblies (22, 24) is modified.

9. Apparatus (1) according to at least one of the preceding claims 6 to 8, **characterised in that**
the apparatus (1) has an interaction device (27) with a communication connection between the direct printing machine (20) and the monitoring device (50, 52), in particular between the memory device (23) of at least one printing assembly (22, 24) and the memory device (53) of the monitoring device (50, 52).

10. Apparatus (1) according to at least one of the preceding claims,
**characterised in that**
the first and/or second treatment device is a direct printing machine, which provides the containers with the image elements to be printed, wherein by the direct printing machine a colour contribution is carried out directly on the container surface, and wherein the apparatus (1) is suitable and intended for carrying out a predefined change of a predefined decoration sequence of image elements (B1 - B8) to be printed by at least one printing assembly (22, 24) by corresponding modifications at both the direct printing machine (20) and the monitoring device (50, 52).

11. Apparatus (1) according to the preceding claim,
**characterised in that**
the apparatus (1) and in particular the control device (50, 52) has a memory device (53) in which is stored at least the predefined decoration sequence (R) of the decoration to be applied by the first container treatment device to the containers (10) to be treated.

12. Method for treating containers (10) with at least a first container treatment device which is suitable and intended for providing the containers (10) to be treated with a different decoration, and provides the containers (10) to be treated with a decoration corresponding to a predefined decoration sequence (R), having a transport device (40) which supplies and/or discharges the containers (10) treated by the first container treatment device along a predefined transport path, preferably individually and successively, to at least one monitoring device (50, 52) for monitoring the treated containers (10),
**characterised in that**
the monitoring device (50, 52) monitors the containers (10) at least with respect to the decoration applied by the first container treatment device, and depending on the monitoring result carries out and/or initiates a change in the predefined decoration sequence (R) of at least the first and/or a second container treatment device, preferably of a direct printing machine (20), wherein by the direct printing device a colour contribution is carried out directly on the container surface.

13. Method according to the preceding claim,
**characterised in that**
the monitoring device (50, 52), depending on the monitoring result, initiates an after-production and/or intermediate production of at least one container (10), preferably with the decoration of the monitored container (10).

## Revendications

1. Dispositif (1) de traitement de récipients (10) avec au moins un premier dispositif de traitement de récipient qui est approprié et destiné à pourvoir les récipients (10) à traiter d'une décoration différente, et qui pourvoit des récipients (10) à traiter respectivement d'une décoration prévue selon une suite de décoration (R) prédéfinie, avec un dispositif de transport (40) qui fournit et/ou évacue les récipients (10) traités par le premier dispositif de traitement de récipient le long d'une voie de transport prédéfinie, de préférence individuellement et les uns après les autres, au moins à un/d'un dispositif de contrôle (50, 52) pour le contrôle des récipients (10) traités,
**caractérisé en ce que**
le dispositif de contrôle (50, 52) est approprié et destiné à contrôler les récipients (10) au moins sur la décoration montée par le premier dispositif de traitement de récipient et entreprendre et/ou demander en fonction de son résultat de contrôle une modification de la suite de décoration (R) prédéfinie au moins du premier et/ou d'un second dispositif de traitement de récipient, de préférence d'un dispositif d'impression (20) et/ou d'une imprimante directe (20), dans lequel une application de couleur est directement effectuée sur la surface de récipient au moyen de l'imprimante directe.

2. Dispositif (1) selon la revendication 1,
**caractérisé en ce que**
le dispositif de contrôle (50, 52) est approprié et destiné à demander en fonction du résultat de contrôle une post-production et/ou production intermédiaire au moins d'un récipient (10), de préférence avec la décoration du récipient (10) contrôlé.

3. Dispositif (1) selon au moins l'une quelconque des revendications précédentes,
**caractérisé en ce que**
une modification du nombre et de l'ordre de la décoration à monter respectivement au niveau des récipients (10) d'au moins un premier dispositif de traitement de récipient est provoquée par le biais d'une modification de la suite de décoration (R).

4. Dispositif (1) selon au moins l'une quelconque des revendications précédentes,
**caractérisé en ce que**
l'au moins un premier dispositif de traitement de récipient et/ou l'au moins un second dispositif de traitement de récipient est sélectionné à partir d'un groupe de dispositifs de traitement de récipient qui comprend une imprimante directe (20), un dispositif de remplissage, un dispositif de fermeture et un dispositif d'emballage.

5. Dispositif (1) selon au moins l'une quelconque des revendications précédentes,
**caractérisé en ce que**
le dispositif de contrôle (50, 52) est approprié et destiné à joindre une autre décoration à la suite de décoration (R) prédéfinie et/ou insérer une autre décoration dans la suite de décoration (R) prédéfinie.

6. Dispositif (1) selon au moins l'une quelconque des revendications précédentes,
**caractérisé en ce que**
le dispositif (1) présente au moins une imprimante directe (20), dans lequel une application de couleur est directement effectuée sur la surface de récipient au moyen de l'imprimante directe qui imprime les récipients (10) avec des éléments d'image (B1-B8) prévus selon la suite de décoration (R) prédéfinie, et le dispositif de contrôle (50, 52) est approprié et destiné à entreprendre et/ou demander une modification de la suite de décoration (R) prédéfinie par rapport aux éléments d'image (B1-B8) à appliquer par l'imprimante directe (20).

7. Dispositif (1) selon la revendication précédente 6,
**caractérisé en ce que**
le dispositif de contrôle (50, 52) est approprié et destiné à entreprendre et/ou demander une modification de la suite de décoration (R) prédéfinie par rapport aux éléments d'image (B1-B8) à appliquer par l'imprimante directe (20) sans transmission d'un élément d'image (B1-B8) à l'imprimante directe (20).

8. Dispositif (1) selon au moins l'une quelconque des revendications précédentes 6 et 7,
**caractérisé en ce que**
un signal est transmis à l'imprimante directe (20) en fonction du résultat du contrôle entrepris par le dispositif de contrôle (50, 52) et la suite prédéfinie d'éléments d'image (B1-B8) à imprimer d'au moins un groupe d'impression (22, 24) et de préférence de deux groupes d'impression (22, 24) de l'imprimante directe (20) est modifiée en réaction au signal transmis et/ou un jeu d'éléments d'image (B1-B8) enregistré dans un dispositif de mémorisation (23) au moins d'un groupe d'impression (22, 24) et de préférence de deux groupes d'impression (22, 24).

9. Dispositif (1) selon au moins l'une quelconque des revendications précédentes 6 à 8,
**caractérisé en ce que**
le dispositif (1) présente un dispositif d'interaction (27) avec une liaison de communication entre l'imprimante directe (20) et le dispositif de contrôle (50, 52), en particulier entre un dispositif de mémorisation (23) d'au moins un groupe d'impression (22, 24) et un dispositif de mémorisation (53) du dispositif de contrôle (50, 52).

10. Dispositif (1) selon au moins l'une quelconque des revendications précédentes,
**caractérisé en ce que**
le premier et/ou le second dispositif de traitement de récipient est une imprimante directe qui pourvoit les récipients d'éléments d'image à imprimer, dans lequel une application de couleur est directement effectuée sur la surface de récipient au moyen de l'imprimante directe, et dans lequel le dispositif (1) est approprié et destiné à entreprendre une modification prédéfinie d'une suite de décoration prédéfinie d'éléments d'image (B1-B8) à imprimer au moins d'un groupe d'impression (22, 24) de l'imprimante directe par des modifications correspondantes non seulement au niveau de l'imprimante directe (20) mais aussi au niveau du dispositif de contrôle (50, 52).

11. Dispositif (1) selon la revendication précédente,
**caractérisé en ce que**
le dispositif (1) et en particulier le dispositif de contrôle (50, 52) présente un dispositif de mémorisation (53), dans lequel est enregistrée au moins la suite de décoration (R) prédéfinie de la décoration à monter par le premier dispositif de traitement de récipient au niveau des récipients à traiter (10).

12. Procédé de traitement de récipients (10) avec au moins un premier dispositif de traitement de récipient qui est approprié et destiné à pourvoir les récipients (10) à traiter d'une décoration différente, et qui pourvoit des récipients (10) à traiter respectivement d'une décoration prévue selon une suite de décoration (R) prédéfinie, avec un dispositif de transport (40) qui fournit et/ou évacue les récipients (10) traités par le premier dispositif de traitement de récipient le long d'une voie de transport prédéfinie, de préférence individuellement et les uns après les autres, au moins d'un dispositif de contrôle (50, 52) pour le contrôle des récipients (10) traités,
**caractérisé en ce que**
le dispositif de contrôle (50, 52) contrôle les récipients (10) au moins sur la décoration montée par le premier dispositif de traitement de récipient et entreprend et/ou demande en fonction de son résultat de contrôle une modification de la suite de décoration (R) prédéfinie au moins du premier et/ou d'un second dispositif de traitement de récipient, de préférence une imprimante directe (20), dans lequel une application de couleur est directement effectuée sur la surface de récipient au moyen de l'imprimante directe (20).

13. Procédé selon la revendication précédente,
**caractérisé en ce que**
le dispositif de contrôle (50, 52) demande en fonction du résultat de contrôle une post-production et/ou production intermédiaire au moins d'un récipient (10), de préférence avec la décoration du récipient (10) contrôlé.
